# EUROPÄISCHE PATENTSCHRIFT

(11) **EP 1 432 656 B1**
(45) Veröffentlichungstag und Bekanntmachung des Hinweises auf die Patenterteilung: **03.08.2005**
(21) Anmeldenummer: 02800142.8
(22) Anmeldetag: 30.09.2002
(51) Int. Cl.: C03B 23/047, C03B 23/043, B29C 55/04, B29D 11/00, G02B 6/36

(54) **VERFAHREN UND VORRICHTUNG ZUR FORMUNG EINES STRUKTURIERTEN KÖRPERS SOWIE VERFAHRENSGEMÄSS HERGESTELLTER KÖRPER**
METHOD AND DEVICE FOR SHAPING A STRUCTURED BODY AND BODY PRODUCED ACCORDING TO SAID METHOD
PROCEDE ET DISPOSITIF POUR FA ONNER UN CORPS STRUCTURE ET CORPS PRODUIT SELON LEDIT PROCEDE

(30) Priorität: 28.09.2001 DE 10148147; 07.06.2002 DE 10225618
(43) Veröffentlichungstag der Anmeldung: 30.06.2004
(73) Patentinhaber: SCHOTT AG, 55122 Mainz (DE)
(72) Erfinder: BÜLLESFELD, Frank, 60314 Frankfurt (DE); KISSL, Paul, 55124 Mainz (DE); LEHNICKE, Sabine, 55270 Esseheim (DE); ZIMMERMANN, Martin, 77972 Mahlberg (DE); KUNERT, Christian, 55122 Mainz (DE); HOPPE, Bernd, 55218 Ingelheim (DE); PLAPPER, Volker, 55291 Saulheim (DE)
(74) Vertreter: Herden, Andreas, Dipl.-Ing.
(86) Internationale Anmeldenummer: PCT/EP2002/010960
(87) Internationale Veröffentlichungsnummer: WO 2003/029156

(56) Entgegenhaltungen:
- EP-A- 0 926 101
- DE-A- 3 902 988
- DE-A- 19 736 732
- FR-A- 2 505 472
- FR-A- 2 788 267

## Beschreibung

Die Erfindung betrifft ein Verfahren zur Formung eines Körpers mit an dessen Oberfläche angebrachten langgestreckten Strukturen, wie insbesondere Einsenkungen, sowie verfahrensgemäß hergestellte Körper und Einrichtungen mit derartigen Körpern. Die Erfindung betrifft außerdem eine Vorrichtung zur Durchführung des Verfahrens zur Formung eines derartigen Körpers.

Es ist bekannt, optische Fasern in erwärmtem Zustand aus Faser-Vorformen zu ziehen und hieraus stark verkleinerte Faserquerschnitte für optische Wellenleiter zu erhalten.

Im Bereich der Mikrosystemtechnik zielen Verfahren darauf ab, sehr feine Strukturen in verschiedene Werkstoffe einzubringen. Üblicherweise handelt es sich bei den Strukturen um punktuelle oder linienförmige Erhebungen oder Vertiefungen. In den fertigen Bauteilen dienen diese Strukturen beispielsweise als Kanäle zur Steuerung von sehr feinen Flüssigkeits- oder Gasströmungen.

In einer Vielzahl von Anwendungen sind diese Strukturen in einer Richtung, beispielsweise in Längsrichtung gleichförmig über das gesamte Bauteil ausgebildet, zum Beispiel in Form von durchgehenden Kanälen oder Stegen. Derartige Bauteile sind beispielsweise in miniaturisierten Wärmetauschern enthalten oder in Bauelementen mit deren Hilfe optische Fasern in eine bestimmte Position gebracht und dort gehalten werden.

Ferner beschreibt die PCT/JP 00/07955 ein Verfahren zur Herstellung von im wesentlichen stabförmigen Linsen, bei welchem durch ein Wiederziehen eines Rohlings verkleinerte Querschnitte dieses Rohlings erhalten werden. Sowohl die vorstehend erwähnten Fasern als auch die im wesentlichen stabförmigen Linsen weisen nach außen hin jeweils Verrundungen auf, die für die Formgebung von erwärmtem Glas äußerst günstig sind, da derartige Verrundungen bei viskosen Materialien aufgrund von deren Oberflächenspannung vom Material selbständig ausgebildet werden können und somit während der Formgebung unterstützt werden.

Die DE 39 02 988 A1 beschreibt ein Verfahren zur Herstellung eines mit einer Nut versehenen Trägers für einen Lichtwellenleiter-Verbinder, wobei die V-Nut mit einem Offnungswinkel von etwa 90° eingeschliffen und die Preform nach entsprechender Erwärmung auf einen Durchmesser von etwa 1/10 des ursprünglichen Durchmessers herabgezogen wird. Ggf. sind weitere Ausnehmungen vorgesehen. Das Verfahren erscheint jedoch in Bezug auf die Ausbeute und erreichbare Toleranzen verbesserungsbedürftig.

Die FR 2 788 267 Al betrifft ein Verfahren zum Herstellen von Glas-Abstandshaltern, wobei ein Mutter-Glas mit einem Querschnitt, der dem erwünschten Querschnitt ähnlich ist, in einem erwärmten Zustand bei einer Viskosität von 10⁵ bis 10⁹ gezogen wird und wobei das gezogene Glas zu einer Vielzahl von Glas-Abstandshaltern geschnitten wird.

Die EP 0 929 101 A1 beschreibt einen Stempel zum Pressformen von Glaselementen mit einem Platinfilm.

In der DE 197 36 732 A1 sind eine Einrichtung und ein Verfahren zur Bearbeitung eines Werkstücks mittels Laserlicht beschrieben.

Ferner beschreibt die FR 2 505 472 A eine Vorrichtung zur Herstellung von optischen Faser mit einer Einrichtung zur Konzentration von Infrarotenergie.

In der optischen Informations- und Nachrichtentechnik werden vielfältig Siliziumsubstrate mit V-Grvoves, die durch Ätzen hergestellt wurden, verwendet, um hiermit exakt vordefinierte seitliche Beabstandungen zu erreichen. Äußerst vorteilhaft ist hierbei, daß die seitliche Positioniergenauigkeit im wesentlichen durch kristallographische Ebenen im Silizium definiert wird und hochpräzise photolithographische Bearbeitungsverfahren einsetzbar sind. Nachteilig ist jedoch die feste Winkelvorgabe der v-förmigen Furche, die im wesentlichen durch die kristallographische Orientierung des Siliziums und selektive Ätzraten bei der photolithographischen Strukturierung vorgegeben ist. Einer kostengünstigen Massenproduktion steht der hohe Preis sowohl der im wesentlichen einkristallinen Siliziumsubstrate als auch der photolithographischen Verfahren deutlich im Weg.

Demgegenüber ergibt sich beim Ausziehen oder Wiederziehen einer strukturierten Vorform das Problem, daß es beim Ausziehen zu nicht maßstabsgetreuen Verformungen der Strukturen der Vorform kommt, so daß die Gestalt der Vorform für viele Anwendungen nicht genau genug auf die ausgezogenen Werkstücke abgebildet wird. Aus der GB 2 108 483 A ist beispielsweise bekannt, daß derartige Formänderungen unter anderem von der Temperatur, dem Querschnitt der Vorform, der Zugkraft und den visko-elastischen Eigenschaften des Vorform-Materials abhängen. Verformungen, die beim Wiederziehen auftreten können, sind Nadelkissen-Verformungen, bei welchen es zu konkaver Wölbung ursprünglich ebener Flächen kommt, sowie auch zu Kantenverrundungen. Der Einfluß der Ziehtemperatur auf die Art der Verformung, konkav oder konvex, ist unter anderem auch aus der US 5,721,050 bekannt.

In der GB 2 108 483 A wird dazu vorgeschlagen, die Formänderungen bei der Herstellung der Vorform zu berücksichtigen. Da die Effekte der Formänderung allerdings abhängig von der Größe der gezogenen Teile, beziehungsweise dem Größenverhältnis von Vorform zu gezogenen Bauteilen abhängt, wird eine Neutralisation der Verformungseffekte aber exakt nur bei einem bestimmten Maßstabsverhältnis erreicht. Um reproduzierbare Ergebnisse zu erhalten, müssen dementsprechend dann auch andere Parameter wie Zugkraft und Temperatur eingehalten werden.

Der Erfindung liegt die Aufgabe zu Grunde, ein kostengünstiges Herstellungsverfahren anzugeben, mit welchem bei hoher seitlicher Positioniergenauigkeit Bauteile, wie beispielsweise Abstandshalter kostengünstig in großen Stückzahlen herstellbar sind. Ferner sollen Beschränkungen der mit dem Verfahren erreichbaren Furchenformen sowie Furchenabmessungen möglichst vermieden werden, um hierdurch die Verwendung verschieden großer Fasern innerhalb der Furchen bei gleichzeitig verbessertem Halt der Fasern innerhalb der Furchen zu ermöglichen.

Diese Aufgabe wird auf überraschend einfache Weise bereits mit einem Verfahren zur Formung eines Körpers mit an dessen Oberfläche angebrachten langgestreckten Strukturen, wie zum Beispiel mit Einsenkungen erreicht, bei welchem eine Vorform an der Oberfläche mit langgestreckten Strukturen, wie insbesondere mit Einsenkungen versehen wird, die mit diesen Strukturen versehende Vorform zumindest in einem Bereich oder zumindest teilweise erwärmt wird und die mit den Strukturen, wie etwa Einsenkungen versehene Vorform im erwärmten Zustand so lang gezogen wird, bis zumindest ein Teil der Vorform einen Querschnitt angenommen hat, der im wesentlichen der erwünschten Querschnittsform oder endgültigen Querschnittsform entspricht.

Bei einer konventionellen Heizung wird das Glas zu einem Großteil durch Absorption oder Konvektion an der Oberfläche erhitzt. Die Durchwärmung des Volumens erfolgt dabei mittels Wärmeleitung und überwiegend langwelliger Infrarotstrahlung, die bereits nach einem kurzen Wegstück wieder absorbiert wird. Diese Mechanismen führen zu einem Temperaturgradienten in der Ziehzwiebel, beziehungsweise im erwärmten Bereich. Damit verbunden ist ein Gradient in der Viskosität. Es kommt daher zu einem ungleichen Fließen des Glases im erwärmten Bereich, beziehungsweise in der Ziehzwiebel.

Zusätzlich zu der Oberflächenspannung führt dieser Effekt zu einer nicht maßstabsgetreuen Verformung, die, wie etwa in der GB 2 108 483 A beschrieben ist, vorzuhalten ist. Diese beschriebenen Effekte lassen sich aber weitgehend umgehen, wenn es gelingt, das auszuziehende Material gleichmäßig zu durchwärmen. Erfindungsgemäß wird hierzu die Vorform mittels einer Strahlungsquelle wie insbesondere mit zumindest einem Infrarotstrahler erwärmt, dessen Strahlung beim Durchgang durch das Material nur für höchstens die Hälfte absorbiert wird. Die geringe Absorption führt dementsprechend zu einer homogenen Erwärmung im Volumen des auszuziehenden Körpers. Aus diese homogenen Erwärmung resultiert ein sehr kleiner Temperaturgradient und somit nur ein sehr kleiner Gradient in der Viskosität des Glases in der Ziehzwiebel, so daß dieses gleichmäßig ausgezogen werden kann, ohne daß sich Verformungen bilden.

Um eine starke Absorption der Strahlung bereits nahe der Oberfläche des Körpers zu verhindern, kann insbesondere bei Vorformen aus Glas oder Glaskeramik die spektrale Verteilung der Strahlung so gewählt werden, daß der überwiegende Teil der spektralen Leistungsdichte im kurzwelligen Infrarotbereich liegt. Die meisten Gläser und Glaskeramiken zeigen eine Absorptionskante im langwelligen Infrarotbereich. Dies ist die Ursache dafür, daß langwellige Infrarotstrahlung, wie sie beispielsweise vom erhitzten Glasmaterial selbst emittiert wird, im Material keine große Reichweite hat, beziehungsweise, weshalb es beim Einsatz konventioneller Heizungen bei niedrigen Farbtemperaturen zu einer starken Absorption an der Oberfläche des zu erwärmenden Materials kommt.

Bezüglich des gleichmäßigen Heizens mit Infrarotstrahlung sei an dieser Stelle auch auf die früheren Anmeldungen der Anmelderin mit den Veröffentlichungsnummern DE 299 05 385 U1, DE 199 38 808 Al und WO 00/56675 A verwiesen.

Die Strahlungsabsorption hängt natürlich in starkem Maße vom Material der Vorform ab. Es ist dementsprechend auch denkbar, andere Strahlungsquellen, etwa im sichtbaren Bereich zu verwenden, sofern die Absorption des Materials in diesem Bereich hinreichend klein ist. Jedenfalls ist vorgesehen, daß die Strahlung, die zum Erwärmen verwendet wird, eine derartige spektrale Verteilung aufweist, so daß höchstens die Hälfte der Strahlungsleistung beim einmaligen Durchqueren des Materials absorbiert wird. Dieser Wert ist als Mittelwert zu verstehen, da die Absorption neben dem Material der Vorform auch von der zu durchquerenden Materialdicke abhängt. Diese ändert sich jedoch entlang des erwärmten Bereichs in Zugrichtung aufgrund des sich in dieser Richtung verkleinernden Querschnitts und ist zudem von der Raumrichtung des jeweiligen Lichtstrahls abhängig.

Besonders bevorzugt wird für die Erwärmung Infrarotstrahlung mit einem Schwerpunkt der Leistungsdichte im kurzwelligen Infrarotbereich verwendet. Viele Gläser oder Glaskeramiken, die vorteilhaft als Material für die Vorform verwendet werden können, weisen eine Absorptionskante bei etwa 2,7 µm Wellenlänge auf, so daß die Transparenz dieser Materialien bei Wellenlängen unterhalb dieses Wertes stark ansteigt. Dementsprechend sind Strahlungsquellen vorteilhaft, die Strahlung emittieren, deren spektrale Leistungsdichte überwiegend oberhalb dieses Wertes liegt. Dies wird beispielsweise dann erfüllt, wenn die Strahlungsquelle Wärmestrahlung mit entsprechend hoher Farbtemperatur emittiert. Liegt die Absorptionskante bei 2,7 µm, so wird die Bedingung, daß die spektrale Leistungsdichte überwiegend bei kleineren Wellenlängen liegen sollte, bei einer Farbtemperatur von 1500 °K erreicht. Hier sind dann etwa 51% der gesamten spektralen Leistungsdichte auf kürzere Wellenlängen verteilt. Die Absorption des Materials der Vorform wird dementsprechend noch geringer und dessen Aufheizung gleichmäßiger, wenn die Farbtemperatur noch höher, beispielsweise oberhalb von 2000 °K liegt. So ist bei einer Ausführungsform der Erfindung vorgesehen, Infrarot-Quarzrohrstrahler zu verwenden, die mit einer Farbtemperatur von circa 2400 °K betreibbar sind. Bei einer Farbtemperatur von 2400 °K liegt nach dem Wienschen Verschiebungsgesetz die Wellenlänge mit der maximalen spektralen Leistungsdichte bei 1210 nm, also deutlich unterhalb von 2,7 µm.

Um die Energieausnutzung zu verbessern, ist es dabei ferner günstig, wenn nicht nur direkte Strahlung verwendet wird, welche direkt ausgehend von der Strahlungsquelle auf den zu erwärmenden Bereich trifft. Vielmehr kann die Strahlungsleistung auch einen Anteil indirekter Strahlung umfassen, welcher nach Reflexion und/oder Streuung auf den Bereich trifft. Auch Strahlungsanteile, die den zu erwärmenden Bereich bereits ohne Absorption transmittiert haben, können so durch Streuung oder Reflexion erneut auf das Material gerichtet werden und dann zur Erwärmung beitragen. Auf diese Weise ist es möglich, auch bei hoher Transparenz des Materials der Vorform für die von der Strahlungsquelle emittierte Strahlung eine effiziente Heizung zu erreichen.

Dementsprechend ist es von Vorteil, wenn eine Vorrichtung zur Ausführung des erfindungsgemäßen Verfahrens, beziehungsweise zur Herstellung erfindungsgemäßer Körper zusätzlich zu einer Strahlungsquelle zur Erwärmung des zu ziehenden Materials auch reflektierende oder die Strahlung streuende Elemente aufweist. Beispielsweise können bei Verwendung von Infrarotstrahlern Quarzal-Wandelemente verwendet werden, welche deren Infrarotstrahlung diffus reflektieren.

Die Erwärmung des Bereichs der Vorform erfolgt um so gleichmäßiger, je geringer der Bruchteil der vom Material der Vorform absorbierten Strahlungsleistung ist. Allerdings verringert sich dabei auch der zur Erwärmung des Materials der Vorform zur Verfügung stehende Anteil der Gesamt-Strahlungsleistung der Strahlungsquelle. So kann die Strahlungsquelle beispielsweise mit Vorteil auch so gewählt, daß weniger als 30% oder sogar weniger als 10% der Strahlungsleistung beim einmaligen Durchqueren des Materials absorbiert werden, wenn es aufgrund des Vorform-Materials auf besonders gleichmäßige Erwärmung ankommt, oder wenn die Ziehvorrichtung mit entsprechend gut reflektierenden Elementen ausgestattet ist, wodurch die Strahlung mit nur geringen Leistungverlusten mehrmals auf die Vorform zurückreflektiert oder zurückgestreut werden kann.

Selbstverständlich kann das Erwärmen des zu ziehenden Materials der Vorform auch durch weitere Heizquellen, wie beispielsweise einer Widerstandsheizung unterstützt werden. Dies kann zum Beispiel dann von Vorteil sein, wenn es an der Oberfläche des erwärmten Materials zu einem Temperaturgradient durch oberflächliche Abkühlung an kälterer Umgebungsluft kommt. Mit einer solchen Zusatzheizung können dann oberflächlich auftretende Temperaturgradienten ausgeglichen werden.
In höchst überraschender Weise führte die Erwärmung und der Ziehvorgang der Vorform in deren erwärmten Zustand nicht dazu, daß die Einsenkungen aufgrund der Oberflächenspannung des viskosen Materials aus dem Substrat herausgedrückt oder herausgetrieben werden. Es war ferner sehr überraschend, daß derartige Einsenkungen um den Faktor zehn, ja sogar hundert verkleinert werden konnten, ohne daß deren Form im wesentlichen verloren ging wobei seitliche absolute Toleranzen in Form und Position dabei um den vorstehend erwähnten Verkleinerungsfaktor nochmals verbessert wurden.

Ein Substrat mit einer seitlichen Toleranz der Furchenflächen relativ zu anderen Furchenflächen von einem Zehntel-Millimeter hatte nach Verkleinerung um den Faktor zehn eine seitliche Toleranz von nur noch etwa einem Hundertstel-Millimeter und nach einer Verkleinerung um den Faktor Hundert sogar nur noch absolute seitliche Toleranzen von etwa einem µm.

Hierdurch konnten kostengünstige Formgebungsverfahren mit guter Präzision, d.h. guten absoluten Toleranzwerten, für die Bearbeitung der Vorform Anwendung finden und bei preiswerten Materialien eingesetzt werden. Durch den Ziehvorgang wurde die Ausbeute der mit dem Verfahren zur Verfügung gestellten Abstandshalter drastisch erhöht und dabei deren absolute Toleranzwerte in hervorragende, hochpräzise Bereiche getrieben.

Ein mit dem erfindungsgemäßen Verfahren herstellbarer Körper zeichnet sich gegenüber vergleichbaren bekannten, mit Mikrostrukturen versehenen Bauteilen auch noch durch weitere charakteristische Eigenschaften aus. So ist beispielsweise gegenüber einem durch Ätzen strukturierten Bauteil die Rauhigkeit der Oberfläche bei einem erfindungsgemäß herstellbaren Körper erheblich reduziert oder sogar im Rahmen der Meßmethoden kaum noch nachweisbar. Entsprechend sind auch die optischen und mechanischen Eigenschaften erfindungsgemäß erzeugbarer Bauteile hervorragend.

Ursächlich für die große Formtreuigkeit, die beim erfindungsgemäßen Ausziehen oder Wiederziehen der Vorform erreicht wird, ist, wie oben bereits ausgeführt, vor allem die besonders gleichmäßige Erwärmung, so daß sich entlang eines Querschnitts im erwärmten Bereich höchstens ein kleiner Temperaturgradient ergibt. Es liegt daher auch im Rahmen der Erfindung, ein Verfahren zur Formung eines Körpers, insbesondere eines Körpers mit an dessen Oberfläche angebrachten langgestreckten Strukturen anzugeben, wobei eine Vorform an der Oberfläche mit entlang einer Richtung langgestreckten Strukturen versehen wird, die mit den Strukturen versehende Vorform zumindest in einem Bereich erwärmt wird und die mit den Strukturen versehene Vorform im erwärmten Zustand so lang gezogen wird, bis zumindest ein Teil der Vorform einen Querschnitt angenommen hat, der im wesentlichen der erwünschten Querschnittsform oder endgültigen Querschnittsform entspricht, welches dadurch gekennzeichnet ist daß im erwärmten Bereich die maximale Temperaturdifferenz entlang des Querschnitts kleiner als 0,5 °C ist.

Mit einem derartig kleinen Temperaturgradienten läßt sich insbesondere beim Ziehen von Gläsern oder Glaskeramiken das erwünschte Ergebnis der sehr formtreuen Wiedergabe der Strukturen auf den verkleinerten Körpern erzielen.

Besonders bevorzugt wird die Erwärmung dabei sogar so durchgeführt, daß im erwärmten Bereich die maximale Temperaturdifferenz entlang des Querschnitts kleiner als 0,1 °C ist.

Somit stellt die Erfindung ein massenfertigungstaugliches, kostengünstiges Herstellungsverfahren bereit, bei welchem sowohl höchste Präzision als auch eine nahezu freie Wahl der erhaltenen Furchenform erreicht wird.

Aufgrund der hervorragenden Ergebnisse bei der Formgebung wurden neue Geometrien, insbesondere für seitliche Abstandshalter verwirklicht, welche hervorragend in optischen nachrichtentechnischen Einrichtungen, in Spektrometern, in optischen Verbindern und auch in optischen nachrichtentechnischen Einrichtungen, wie beispielsweise Faser-zu-Festkörper-Wellenleiter-Interfaces bei der Übertragung optischer Signale verwendbar sind.

Besonders vorteilhaft kann die Vorform durch Schleifen, Heißformung innerhalb einer über den Schmelzpunkt erwärmten Pressform, durch Blankpressen oder durch Heißprägen mittels eines Stempels, welcher im wesentlichen eine Negativform der erwünschten Form der zu bearbeitenden Oberfläche aufweist, formgebend bearbeitet werden.

Insbesondere geeignet für die Herstellung von erhabenen Strukturen ist das Aufschmelzen profilierter Stränge auf die Vorform, so daß die auf die Vorform aufgeschmolzenen Stränge diese erhabenen Strukturen bilden.

Die Einstellung der für das Wiederziehen geeigneten Viskosität kann beispielsweise durch die Regulierung der Temperatur des zu verlängernden Abschnitts erfolgen, wobei je nach Material der Vorform in der Regel Temperaturen zwischen etwa 100°C und 2000°C günstig sind.

Die Erfindung konnte mit sehr gutem Erfolg verwirklicht werden bei Gläsern, wie etwa Borofloatglas. Der Ziehvorgang konnte hierbei vorteilhaft bei Borofloatglas bei etwa 850 °C durchgeführt werden.

Bei einer besonders bevorzugten Ausführungsform der Erfindung wurde die Vorform in erwärmtem Zustand bei einer Viskosität von etwa 10⁸ dPas gezogen, wodurch eine im wesentlichen Vollständige Form-erhaltende Querschnittsverkleinerung eintrat, welche, bezogen auf das Flächenverhältnis der Querschnitte, noch im Bereich von 1/100 der ursprünglichen Querschnittsfläche, ja sogar in einem Bereich von 1/10.000 der ursprünglichen Querschnittsfläche noch hochgradig formtreue geformte Körper ergab.

Die stark in deren Länge vergrößerten gezogenen Körper wurden durch Ritzen und Brechen in vorteilhafter Weise abgelängt und vereinzelt. In weiterhin vorteilhafter Weise wurden die durch Ritzen und Brechen abgelängten und/oder vereinzelten Körper an ihrer Oberseite plan geschliffen, um dergestalt die mechanische Kopplung an weitere Baugruppen zu ermöglichen.

Das Verfahren läßt sich ebenso vorteilhaft auf Kunststoffkörper, insbesondere solche, die einen thermoplastischen Kunststoff umfassen, anwenden.

Eine besonders bevorzugte Ausführungsform verwendete Glaskeramik, welche im Bereich der Raumtemperatur nahezu keine thermische Ausdehnung aufweist. Hierdurch ist insbesondere bei der Herstellung von Gittern für Spektrometer ein extrem stabiler Betrieb derartiger Spektrometer gewährleistet und hohe Präzision zuverlässig sichergestellt.

Bevorzugte Formen der Einsenkungen umfassen generell Furchen die sich im wesentlichen parallel zur Längsachse des geformten Körpers erstrecken.

Bei der ersten bevorzugten Ausführungsform umfaßten die Furchen einen im wesentlichen V-förmigen Querschnitt, der ebenfalls eine um die Längsachse der Furche vekippte V-Form umfaßte um auf diese Weise Gitter mit einem Blazing bereit zu stellen, bei welchen die Intensität des gebeugten Lichtes in zumindest einer Beugungsordnung erhöht war.

In alternativen erfindungsgemäßen Ausführungsformen des geformten Körpers wiesen die Furchen vorteilhaft einen im wesentlichen Rechteck- oder Trapezförmigen-Querschnitt auf, bei welchem, wie ebenfalls bei den V-förmigen Furchen oder auch bei U-förmigen Furchen die Neigung der Seitenwände der Furchen einem im wesentlichen frei vordeffinierbarem Neigungswinkel der Vorform entsprachen.

Obwohl in den Figuren nicht näher dargestellt, können auch Furchen mit Hinterschneidungen realisiert werden, sofern diese Hinterschneidungen in die Vorform vor dem Ziehen einbringbar sind. Beim Ziehvorgang werden diese Furchenformen ebenfalls im wesentlichen formerhaltend auf den verfahrensgemäß erhaltenen geformten Körper abgebildet.

In weitere Ausgestaltung der Erfindung ist beispielsweise ein Wellenleiter in die Furche eingelegt und dient der geformte Körper als Abstandshalter für eine Anordnung optischer Wellenleiter, welche auf diese Weise hochgenau an weitere Wellenleiter auf vorjustierte Weise angeschlossen werden können. Diese weiteren Wellenleiter können mit photolithographischer Genauigkeit in der Oberfläche eines Festkörpers ausgebildet sein. Derartige Festkörper können Sender, Empfänger, Modulatoren oder in allgemeiner Weise optische Schaltkreise optischer nachrichtentechnischer Systeme sein.

Bei einer weiteren alternativen Ausführungsform ist ein transparentes Material in die Furche eingebracht, welches einen anderen Brechungsindex als das Substrat aufweist und wird auf diese Weise vorteilhaft in der Furche selbst ein Wellenleiter definiert.

Wird der geformte Körper, beispielsweise mit einer dielektrischen mehrlagigen Beschichtung reflektierend beschichtet, kann hierdurch ein Reflektionsgitter mit hoher Genauigkeit und Optimierung durch Blazing für eine Beugungsordnung bereit gestellt werden.

Ohne derartige Beschichtung kann das Gitter als Transmisionsgitter verwendet werden, vorteilaft ist es hierbei, wenn ein transparentes Substrat gewählt wird und an der jeweiligen Oberfläche des Gitters eine Anti-Reflektschicht aufgebracht wird.

Für in dem Substrat transmittiertes Licht kann das an der Oberfläche ausgebildete Gitter bei dessen geeigneter Dimensionierung als Gitter mit verteilter Bragg-Reflektion eingesetzt werden und Licht aus dem Substrat heraus oder in das Substrat hinein gekoppelt werden. Derartige Ein- und Auskoppelvorgänge sind beispielsweise für dotierte Wellenleiterverstärker, insbesondere mit seltenen Erden dotierte Wellenleiterverstärker von großem Interesse. Ferner kann bei einer sehr einfachen Ausführungsform eines Regensensors Licht in die Scheibe eines Kraftfahrzeugs eingekoppelt und nach einer gewissen Transmissionsstrecke durch die Kraftfahrzeugsscheibe wieder ausgekoppelt werden, wobei die in der Kraftfahrzeugscheibe durch auf die Scheibe auftreffende Regentropfen erlittenen Transmissionsverluste mit hoher Genauigkeit meßbar sind.

Es existiert außerdem ein großer Bedarf nach feinst strukturierten Bauteilen, die auf mehr als einer Seite Strukturen aufweisen. Insbesondere interessant sind Bauteile, die auf gegenüberliegenden Seiten Strukturen aufweisen. Beispielsweise kann die Struktur auf der Unterseite des Bauteils zur Justage des Bauteils auf einer Unterlage dienen. Ein weiterer üblicher Fall ist gegeben, wenn mehrere Bauteile übereinander gestapelt werden sollen und eine genaue Ausrichtung der einzelnen Bauteile entscheidend ist.

Eine bekannte Methode zur Herstellung derartiger Teile nutzt die aus der Mikroelektronikfertigung bekannte Photolithographie auf Silizium, die über Maskentechniken sehr feine Strukturen optisch auf ein Substrat übertragen kann, die sich anschließend in Ätzprozessen als geometrische Strukturen herausbilden. Dieses sehr genaue Verfahren ist mit einem erheblichen Aufwand verbunden, so dass es sich für die Massenfertigung von günstig zu erzeugenden Teilen verbietet. Zudem sind auf diese Weise nur sehr wenige Materialien, wie beispielsweise einkristallines Silizium, bearbeitbar.

Mit diesem Material sind ebenfalls hohe Kosten verbunden. Neben den hohen Kosten ist es mit diesem Verfahren nicht möglich, auf beispielsweise zwei gegenüber liegenden Seiten eines Bauteils zueinander exakt ausgerichtete Strukturen zu erzeugen, da nur eine Seite der Bearbeitung zugänglich ist.

Ein weiterer Nachteil dieses Verfahrens ist, dass nur Strukturen, die den Gitterebenen des Grundmaterials Silizium folgen, herausgearbeitet werden können. Somit ist man bei der Auswahl der möglichen Strukturen sehr begrenzt.

Zur Erzeugung mikrostrukturierter Bauteile für die Massenproduktion wird das LIGA-Verfahren (LIGA="Lithographie, Galvanoformung und Abformung") entwickelt. Mit dem LIGA-Verfahren können dreidimensionale Teile aus Kunststoff, Metall oder Keramik hergestellt werden, die Strukturen im Submikrometerbereich aufweisen. Die Herstellung der Masken für das LIGA-Verfahren erfordert jedoch hochenergetische, brilliante Röntgenstrahlung, so daß die Maskenbelichtung in der Regel aufwendig mit Synchrotronstrahlung vorgenommen werden muß, was einen erheblichen Kostenfaktor für die Massenproduktion darstellt. Da auch dieses Verfahren auf lithographische Maskenherstellung zurückgreift, ergibt sich zudem wiederum das Problem, daß eine Herstellung mehrseitig strukturierter Bauteile mit exakt aufeinander ausgerichteten Mikrostrukturen nicht ohne weiteres möglich ist.

Mit der vorliegenden Erfindung ist es in einfacher Weise auch möglich, solche Bauteile herzustellen, die auf mehr als einer Oberfläche Strukturen im Mikrometerbereich aufweisen, wobei die Strukturen genau aufeinander ausgerichtet sind.

Dementsprechend sieht die Erfindung ein Verfahren zur Herstellung von Körpern mit zumindest entlang einer Richtung des Körpers langgestreckten Strukturen vor, wobei ein Vorkörper hergestellt wird, welcher auf zumindest zwei Seiten die entlang einer Richtung langgestreckten Strukturen in vergrößertem Maßstab aufweist und wobei durch Anlegen einer Kraft an den Vorkörper der Vorkörper in der Richtung, in welcher die Strukturen langgestreckt sind, verlängert wird und die Strukturen auf der Vorform in verkleinertem Maßstab auf einem Stab oder Band abgebildet werden.

Eine auf mehr als einer Oberfläche mit in einer Richtung langgestreckten Strukturen versehenen Vorform wird mit dem erfindungsgemäßen Verfahren auf diese Weise in einem Wiederziehprozess in ein kontinuierliches Band umgeformt, dessen Querschnitt dem ursprünglichen Querschnitt verkleinert entspricht. Auf den Oberflächen des Bandes oder Stabes finden sich somit die auf der Vorform vorhandenen Strukturen in miniaturisierter Form wieder.

Durch das erfindungsgemäße Verfahren wird auf höchst überraschend einfache Weise nicht nur eine maßstabsgetreue Verkleinerung der auf die Oberfläche der Vorform aufgeprägten Strukturen erreicht, sondern auch eine entsprechende Verkleinerung der Fertigungstoleranzen der Vorform. Somit lassen sich mit dem erfindungsgemäßen Verfahren sehr genau gefertigte Mikrostrukturen erzeugen. Die mehrseitige Aufprägung von Mikrostrukturen erlaubt es außerdem, daß auch die Strukturen verschiedener Seiten der Bauteile genau zueinander ausgerichtet sind. Durch die gleichzeitige Herstellung der Strukturen auf allen Seiten des wiedergezogenen Bandes oder Stabes aus einer relativ grob strukturierten Vorform ist die geometrische Lage der Strukturen zueinander auf beispielsweise der Unter- und Oberseite sehr eng toleriert und reproduzierbar herstellbar. Dies ist mit den bisher bekannten Verfahren nicht möglich. Mit dem erfindungsgemäßen Verfahren ist es zudem möglich, durch Kontrolle der relativ großskaligen geometrischen Maße der Vorform die Lage der Strukturen zueinander sehr genau zu überprüfen, noch bevor der eigentliche Herstellungsprozeß des Bauteils durchlaufen wurde. Durch sehr genaue Kontrolle der Herstellparameter, wie beispielsweise der Temperatur, bei der die Vorform wiedergezogen wird und der Ziehgeschwindigkeit können alle Abmessungen des Querschnitts der Vorform verkleinert im so hergestellten Band oder Stab wieder gefunden werden.

Ein weiterer Vorteil des Verfahrens ergibt sich, wenn die zumindest zwei Seiten im wesentlichen einander gegenüberliegen. Beim Wiederziehen einseitig strukturierter Vorformen treten häufig Verwölbungen und Verbiegungen des hergestellten Bandes oder Stabes auf, die zu unzulässigen Abweichungen des Querschnittprofils des hergestellten Bandes oder Stabes von der Sollgeometrie führen. Ursache dafür ist die unsymmetrische Verteilung des umzuformenden Materials bereits in der Ausgangsform, die eine Neigung des Glasbandes zur unkontrollierten Verformung begünstigt. Durch Ausbildung von Strukturen auf einer der ersten strukturierten Seite im wesentlichen gegenüberliegenden Seite kann dieser Tendenz zur Verformung entgegengewirkt werden. Durch die Aufbringung der Strukturen auf mindestens zwei im wesentlichen gegenüberliegenden Seiten der Vorform wird die Neigung zur unkontrollierten Verformung des Bandes beseitigt.

Um durch das Anlegen einer Kraft eine Verformung der Vorform zu bewirken, wird vorzugsweise zumindest einen Abschnitt des Vorkörpers auf eine Temperatur erwärmt, bei der sich das Material plastisch verformen läßt. Aufgrund der im erwärmten Bereich in der Regel erniedrigten Viskosität des Materials der Vorform geschieht die Verlängerung der Vorform dann kontrolliert und im wesentlichen im Bereich des erwärmten Abschnitts durch Anlegen der Kraft.

Bei dem erfindungsgemäßen Verfahren ist es weiterhin von Vorteil, wenn die Vorform einseitig in einer Aufnahme gehalten wird. Vorzugsweise wird dann die Kraft, die zum Wiederziehen der Vorform verwendet wird, an das der Aufnahme entgegengesetzte Ende der Vorform angelegt.

Besonders vorzugsweise wird ferner der erwärmte Bereich räumlich festgehalten und die Vorform nachgeführt, so daß kontinuierlich ein Strang mit verkleinertem Querschnitt gezogen werden kann.

Es liegt außerdem im Rahmen der Erfindung, eine Vorrichtung zur Durchführung des erfindungsgemäßen Verfahrens, beziehungsweise zur Herstellung erfindungsgemäßer geformter Körper anzugeben. Eine solche Vorrichtung umfaßt dementsprechend
- eine Strahlungsquelle zur Erwärmung wenigstens eines Bereichs einer Vorform,
- eine Aufnahme zur einseitigen Halterung einer Vorform, sowie
- eine Zugvorrichtung zum Ausziehen der Vorform.
Dabei weist die Strahlung der Strahlungsquelle eine derartige spektralen Verteilung auf, daß höchstens die Hälfte der Strahlungsleistung beim einmaligen Durchqueren des Materials absorbiert wird.

Die Vorrichtung ist weiterhin bevorzugt mit einer Einrichtung zur Nachführung der Vorform ausgestattet. Mit dieser Einrichtung wird Material der Vorform dem erwärmten Bereich, beziehungsweise der Ziehzwiebel zugeführt, während auf der gegenüberliegenden Seite der Ziehzwiebel mit der Zugvorrichtung das erwärmte Material ausgezogen wird. Auf diese Weise zieht die Zugvorrichtung einen erfindungsgemäßen Körper mit im wesentlichen maßstabsgetreu verkleinerten Querschnittabmessungen aus der Vorform.

Um störende äußere Einflüsse, welche die Temperaturverteilung in der Ziehzwiebel beeinflussen könnten, zu verringern, kann die Strahlungsquelle in einer Heizmuffel angeordnet sein. Mit dieser Anordnung werden beispielsweise die Oberfläche des erwärmten Bereichs kühlende Luftströmungen verringert.

Insbesondere zum Ziehen von Vorformen aus Glas oder glaskeramischem Material ist es von Vorteil, wenn die Strahlungsquelle zumindest einen Infrarotstrahler umfaßt. Dieser ist bevorzugt so ausgelegt, daß er Wärmestrahlung mit einer Farbtemperatur von mehr als 1500 K oder mehr als 2000 K emittieren kann, um die Absorption im Glas oder der Glaskeramik gering zu halten.

Wie oben erwähnt, ist es ferner vorteilhaft, wenn die Vorrichtung zumindest ein die Strahlung der Strahlungsquelle reflektierendes oder streuendes Element umfaßt, um eine gute Effizienz bei der Erwärmung zu erreichen.

Die Erfindung wird nachfolgend anhand bevorzugter Ausführungsformen und unter Bezugnahme auf die beigefügten Figuren detaillierter beschrieben.
Es zeigen:
- Fig. 1:: eine Vorform für die Durchführung des erfindungsgemäßen Verfahrens in einer Aufsichtsdarstellung,
- Fig. 2A und 2B:: perspektivische Ansichten weiterer für die Durchführung des erfindungsgemäßen Verfahrens geeigneter Vorformen,
- Fig. 3:: eine entlang der Querschnittsebene B-B verlaufende Querschnittsfläche des in Fig. 4 dargestellten geformten Körpers, welche im wesentlichem der Form de in Fig. 1 dargestellten, entlang der Ebene A-A verlaufenden Querschnittsfläche der Vorform entspricht,
- Fig. 4:: eine Darstellung der Vorform während des Zugvorgangs beim Übergang in den geformten Körper in einer Aufsicht,
- Fig. 5:: ein durch Ziehen der Vorform erhaltenes Querschnittsprofil eines durch den Ziehvorgang in den Abmessungen stark verkleinerten Substrats mit einer gegenüber Fig. 3 geänderten Furchenform, welche den geformten Körper geeignet macht für den Einsatz als blazed Gitter,
- Fig. 6:: ein durch Ziehen der Vorform erhaltenes Querschnittsprofil eines durch den Ziehvorgang in den Abmessungen stark verkleinerten Substrats, bei welchem die Furchen mit einem transparenten weiteren Material gefüllt sind,
- Fig. 7:: eine weitere Ausführungsform des geformten Körpers mit stark verrundeten Kanten der v-förmigen Furchen,
- Fig. 8:: die in Fig. 7 dargestellte Ausführungsform des geformten Körpers, bei welchem die Furchen mit einem transparenten weiteren Material gefüllt sind,
- Fig. 9:: eine nochmals weitere erfindungsgemäße Ausführungsform mit im wesentlichen rechteckförmigen, vorzugsweise quadratischen Furchen, bei welcher zumindest die Furchen mit einem weiteren Substrat bedeckt ist,
- Fig. 10:: das in Fig. 7 dargestellte Querschnittsprofil mit gefüllten Furchen, jedoch ohne das in Fig. 9 gezeigte weitere Substrat,
- Fig. 11:: eine nochmals weitere erfindungsgemäße Ausführungsform mit im wesentlichen u-förmigen Furchen,
- Fig. 12:: die in Fig. 11 dargestellte nochmals weitere erfindungsgemäße Ausführungsform mit im wesentlichen u-förmigen Furchen, bei welcher die Furchen mit einem transparenten weiteren Material gefüllt sind,
- Fig. 13:: einen geformten Körper, in welchem optische Wellenleiter angeordnet sind,
- Fig. 14:: ein Querschnittsprofil einer Ausführungsform eines durch Ziehen der Vorform erhaltenen Bauteils, welches durch den Ziehvorgang in den Abmessungen gegenüber der Vorform stark verkleinert ist.
- Fig. 15:: ein Querschnittsprofil einer weiteren Ausführungsform eines durch Ziehen der Vorform erhaltenen Bauteils mit trapezförmigen Kanalstrukturen,
- Fig. 16: ein Querschnittsprofil noch einer weiteren Ausführungsform eines Bauteils mit sich ergänzenden Rillenstrukturen auf gegenüberliegenden Seiten,und
- Fig. 17: ein Querschnittsprofil noch einer weiteren Ausführungsform eines Bauteils, welches zusätzlich zur Ober- und Unterseite auch an den seitlichen Flächen uniaxiale Strukturen aufweist,
- Fig. 18: eine Darstellung der gemessenen tatsächlichen Querschnittsform eines erfindungsgemäß hergestellten Körpers,
- Fig. 19: einen Vergleich der Planarität eines erfindungsgemäß unter Verwendung von kurzwelliger Infrarotstrahlung gezogenen Körper mit einem mittels konventioneller Widerstandsheizung erwärmten und gezogenen Körper dargestellt
- Fig. 20: eine Illustration von geometrischen Meßgrößen zur Quantifizierung der beim Ziehen von Körpern möglichen auftretenden Deformationen, und
- Fig. 21: einen schematischen Querschnitt durch eine Heizmuffel zum Erwärmen der Ziehzwiebel mit kurzwelliger Infrarotstrahlung.

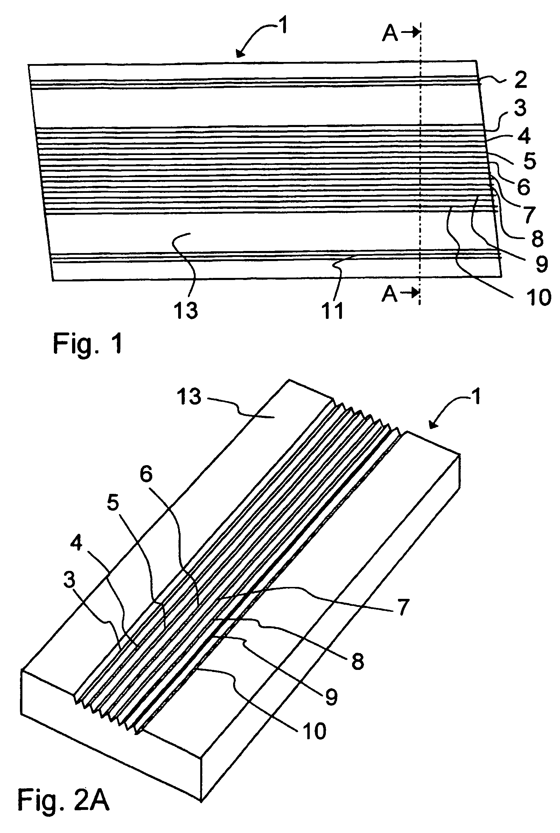

Die Erfindung wird nachfolgend anhand bevorzugter Ausführungsformen näher beschrieben, wobei zunächst auf Fig. 1 Bezug genommen wird, welche eine im Ganzen mit dem Bezugszeichen 1 ersehene Vorform mit in diese eingebrachten Furchen in einer Aufsicht von oben her zeigt.

Zusätzlich zu den Furchen 2 bis 11 ist an der in Fig. 1 links dargestellten Seite eine Einsenkung angeordnet zur Aufnahme in einer, dem Fachmann an sich bekannten und in den Figuren nicht näher dargestellten Zugvorrichtung.

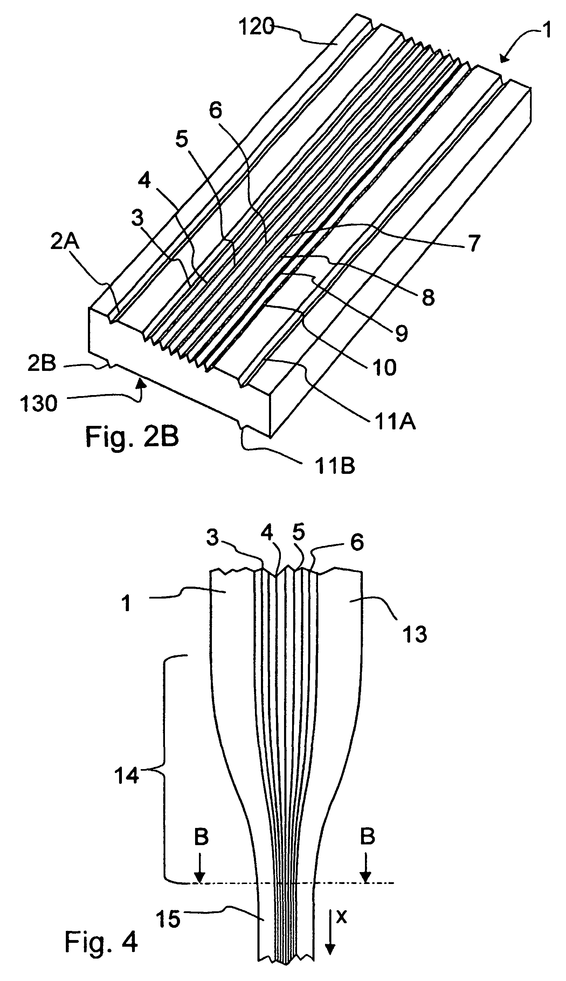

Eine weitere erfindungsgemäße Vorform 1 ist in Fig. 2 gezeigt, bei welcher auf die Furchen 2 und 11 verzichtet wurde.

Fig. 2 zeigt eine perspektivische Ansicht noch einer weiteren Ausführungsform der Vorform 1. Auf der gegenüberliegenden Seite 130 der ersten Seite 120 sind Strukturen 2B und 11B in der Form v-förmiger Erhebungen angeordnet. Die Strukturen 2B und 11B weisen dabei jeweils einen zu den rillenförmigen Strukturen 2A und 11A komplementäre Querschnitte auf. Die Erhebungen 2B und 11B sind weiterhin zueinander im gleichen Abstand wie die dazu komplementären, rillenförmigen Einsenkungen 2A und 11A angeordnet. Die aus dieser Vorform durch Wiederziehen und Abtrennen von Abschnitten gewonnenen Bauteile, die im wesentlichen einen maßstabsgetreu verkleinerten Querschnitt aufweisen, können vermittels der ineinandergreifenden Strukturen 2A und 2B, bzw. 11A und 11B so gestapelt werden, daß die erste Seite eines ersten Bauteils und die zweite Seite eines weiteren Bauteils aufeinander zu liegen kommen, wobei durch die ineinandergreifenden Mikrostrukturen eine genaue Positionierung der Bauteile zueinander quer zu der Richtung, in welcher sich die Strukturen erstrecken, erreicht wird.

Sehr gut sind die in der Oberfläche 13 angeordneten Furchen 3 bis 10 mit deren im wesentlichen v-förmigen Profil in der Darstellung der Vorform 1 in Fig. 2 zu erkennen.

Nachfolgend wird auf Fig. 4 Bezug genommen, welche die Vorform 1 während des Zugvorgangs in zumindest teilweise erwärmtem Zustand zeigt, wobei der Einfachheit halber nur wenige Einsenkungen mit Furchenform 3 bis 6 dargestellt sind.

In einem erwärmtem Bereich 14 der Vorform 1 wird eine Zugkraft in an sich bekannter Weise auf die Vorform 1 ausgeübt und dergestalt ein Zug in Richtung des Pfeils X durchgeführt, welcher die Vorform 1 auf deren im wesentlich erwünschte Querschnittsform beziehungsweise deren endgültige Querschnittsform zu dem verfahrensgemäß herzustellenden Körper 15 formt.

Die Erwärmung kann durch im wesentlichen alle dem Fachmann bekannten Erwärmungsverfahren, wie z. B. thermische oder nicht-thermische Strahlung, laminare Luftströmungen oder durch Umwicklung des zu erwärmenden Bereichs mit einer Heizmatte geschehen. Vorzugsweise ist mit Heiztechnologieen zu arbeiten, die das Volumen des zu ziehenden Körpers homogen aufheizen. Dies kann z.B. mit kurzwelliger-IR Strahlung oder mit Mikrowelle erreicht werden. Die Erwärmung wird aber insbesondere so durchgeführt, daß im erwärmten Bereich die Temperaturdifferenz entlang des Querschnitts kleiner als 0,5 °C oder sogar kleiner als 0,1 °C ist. Auf diese Weise ergeben sich entlang einer Richtung in der Querschnittsfläche nur ein kleiner oder verschwindender Temperaturgradient. Damit sind auch Unterschiede in der Viskosität innerhalb einer Querschnittsfläche, sowie auch der Oberflächenspannung entlang der Umrandungskurve einer solchen Querschnittfläche im erwärmten Bereich 14, beziehungsweise der Ziehzwiebel sehr klein. Daher können bei solch kleinen Temperaturdifferenzen Verformungen, wie Verrundungen und konkave Verformungen ursprünglich ebener Flächen weitestgehend vermieden werden.

Große Sorgfalt ist jedoch aufzuwenden für eine über den Querschnitt des erwärmten Bereichs 14 konstante Temperatur. Abweichungen von mehr als einem halben Grad Celsius, vorzugsweise von mehr als einem zehntel Grad Celsius sollten innerhalb des erwärmten Bereichs 14, dies bedeutet entlang des gesamten Querschnitts vermieden werden.

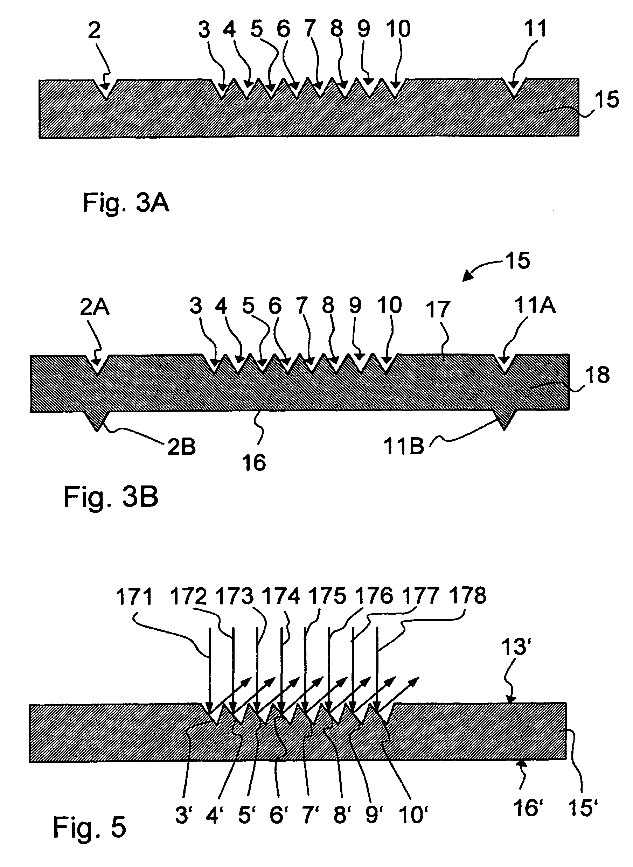

Zwei Ausführungsformen von durch den Ziehvorgang geformten Körpern 15 mit dessen v-förmigen Furchen, welcher einer formgetreuen, jedoch im Querschnitt reduzierten Nachbildung der Vorform 1 entspricht, sind in den Fig. 3A und 3B dargestellt.

Der in Fig. 3B gezeigte Körper weist dabei im Unterschied zu dem in Fig. 3A gezeigten Körper neben dessen v-förmigen Furchen 2A, 11A, 3 - 10 auch Erhebungen 2B, 11B im Substrat 18 des Körpers 15 auf.

Eine nahezu exakt zur Querschnittansicht entlang der Querschnittsfläche B-B aus Fig. 4 gleiche Querschnittsform ergibt sich entlang der Querschnittsfläche A-A aus Fig. 1, welche im Bereich der unverformten Vorform 1 angeordnet ist.

Die in den Fig. 1 und 2 dargestellte Vorform 1 wird an deren Oberfläche 13 vor dem Erwärmen und Ziehen mittels Schleifen, Heißformung innerhalb einer Preßform, durch Blankpressen oder durch Heißprägen mittels eines Stempels, welcher im wesentlichen eine Negativform der gewünschten Form der zu bearbeitenden Oberfläche aufweist, formgebend bearbeitet.

Ferner ist in erfindungsgemäßer Weise jedes weitere, dem Fachmann zugängliche formgebende Verfahren, wie beispielsweise photlitographische- oder Ätzverfahren zur Formgebung verwendbar, soweit derartige Verfahren aus Kostengründen nicht unangemessen sind.

Nach der Bearbeitung wird die Vorform 1 in einer in den Fig. nicht dargestellten Zugvorrichtung eingespannt und in deren Bereich 14 auf eine Temperatur von etwa 100°C bis 2.000°C erwärmt.

Bei Borofloatglas beträgt die verfahrengemäß verwendete Temperatur des erwärmten Bereichs etwa 850°C.

Durch die thermische Behandlung soll erreicht werden, daß die Vorform in deren erwärmtem Bereich eine Viskosität annimmt, die in einem Bereich von etwa 10⁵ dPas bis 10¹⁰ dPas liegt. Besonders bevorzugt ist hierbei eine Viskosität von 10⁸ dPas.

Nach dem Zugvorgang läßt man den gezogenen Körper 15 langsam und gleichmäßig über den Querschnitt erkalten, wodurch dieser wieder seine Ausgangsfestigkeit erhält.

In besonders bevorzugter Weise wird der geformte Körper dann an dessen im folgenden als Unterseite bezeichneten Seite 16 quer zur Zugrichtung X eingeritzt und gebrochen, um diesen auf gewünschte Längen zu bringen und zu vereinzeln.

Es liegt ferner im Rahmen der Erfindung, die Vereinzelung durch Sägen, Trennung mittels Laserlicht oder durch geeignete andere mechanische Verfahren vorzunehmen.

Soweit das Trennverfahren eine rauhe Oberfläche an der Trennstelle zurückläßt, wird diese Rauhigkeit durch stirnseitiges Planschleifen auf die gewünschten Restrauhigkeitswerte reduziert. Derartige Schleifverfahren sind dem Fachmann auf diesem Gebiet wohl bekannt.

Neben Borofloatglas wird ebenfalls anderes Glas und insbesondere Quarzglas in erfindungsgemäßer Weise verwendet.

Bei einer weiteren, besonders bevorzugten Ausführungsform, umfaßt die Vorform 1 eine Glaskeramik mit einem Temperaturbereich innerhalb dessen diese Glaskeramik nahezu keine thermische Ausdehnung aufweist oder ein Glas, welches sich nach der Umformung in eine Glaskeramik umwandeln lässt, mit einem Temperaturbereich innerhalb dessen diese Glaskeramik nahezu keine thermische Ausdehnung aufweist.

In weitere erfindungsgemäßer Ausgestaltung umfaßt die Vorform 1 sowie der gezogene Körper 15 einen thermoplastischen Kunststoff, welcher durch Erwärmung ebenfalls die vorstehend beschriebenen Viskositätswerte annehmen kann.

Nachfolgend wird auf Fig. 5 Bezug genommen, in welcher die Furchen 3' bis 10' asymetrisch angeordnet sind, beziehungsweise einen v-förmigen Querschnitt aufweisen, bei welchem das v relativ zur Längsachse des Körpers 15' seitlich verkippt ist.

Hierdurch ergibt sich ein umgangssprachlich als geblazt bezeichnetes Gitter, bei welchem Licht, welches mit den Phasenfrontvektoren 171 bis 178 beispielhaft dargestellt ist reflektiert und gebeugt wird, wobei für eine bestimmte Beugungsordnung eine erhöhte Lichtintensität zur Verfügung gestellt wird. Die hierfür nötigen Winkel der Seitenwände der Furchen 3' bis 10' sind dem Fachmann wohl bekannt.

Das in Fig. 5 dargestellte Gitter kann an dessen Oberfläche 13' mit einer reflektierenden metallischen oder dielektrischen Beschichtung versehen sein, wodurch die Reflektivität der Oberfläche 13' stark erhöht wird.

Soweit durch die Erfindung ein Transmissionsgitter zur Verfügung gestellt werden soll, werden vorteilhaft anstatt der reflektierenden Schicht an der Oberfläche 13' Antireflexschichten an der Oberfläche 13' und der Unterseite 16' des geformten Körpers 15'angeordnet.

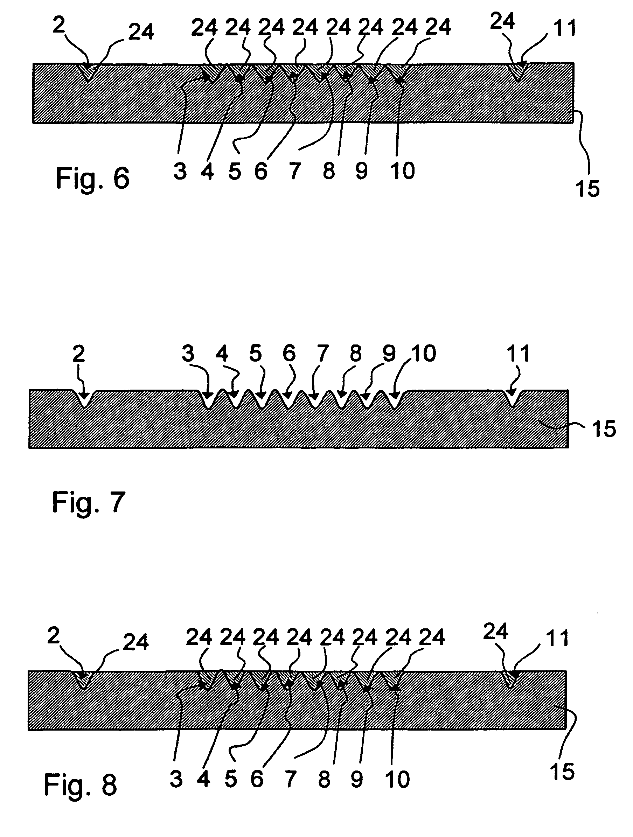

Nachfolgend wird auf Fig. 6 Bezug genommen, welche eine Querschnittsdarstellung des in Fig. 3 gezeigten Körpers 15, jedoch mit gefüllten Furchen 2 bis 11 zeigt.

In den Furchen 2 bis 11 ist ein weiteres Material, vorzugsweise ein Glas 24 oder ein Kunststoff angeordnet, welches einen anderen Brechungsindex als das Substrat des geformten Körpers 15 aufweist.

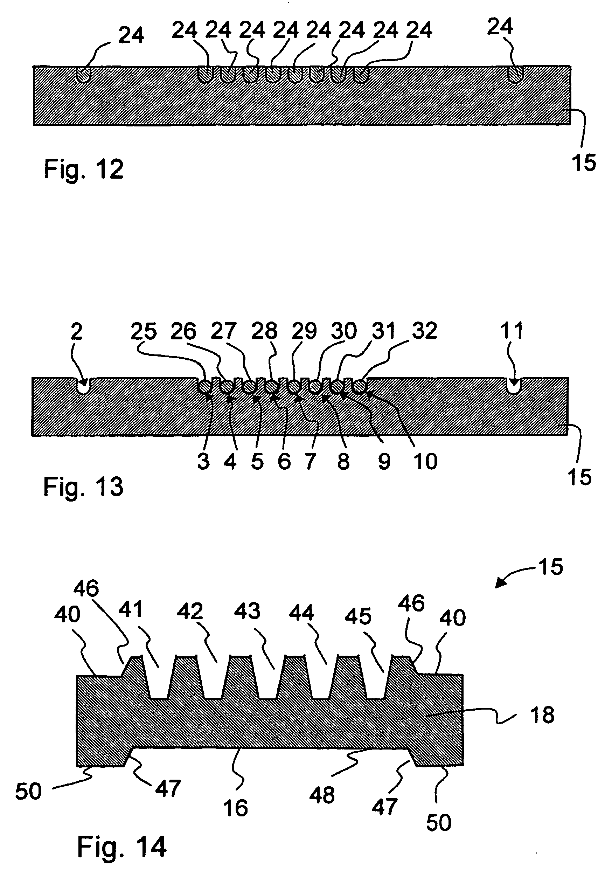

Hierdurch werden innerhalb der Furchen 2 bis 11 Wellenleiter definiert, welche beispielsweise als Fortsetzung zu den in Fig. 13, in einem geformten Körper 15 mit U-förmigen Furchen 3 bis 10 angeordnet Wellenleiter dienen, wodurch auf einfache Weise der Übergang zu weiteren Festkörper-Wellenleitern ermöglicht wird, wenn der geformte Körper 15 aus Fig. 6 mit den weiteren Festkörper-Wellenleitern verbunden wird.

In alternativer Ausgestaltung zu den in den Fig. 3 und 6 dargestellten Furchen können sowohl die Vorform 1 als auch der geformte Körper 15 verrundete Kanten aufweisen, wie dieses in den Fig. 7 und 8 gezeigt ist.

In weiterer erfindungsgemäßer Ausgestaltung, sind in den Fig. 11, 12 und 13 geformte Körper 15 dargestellt, in welche U-förmige Furchen 2 bis 11 eingebracht sind.

Gemäß Darstellung in Fig. 12 sind die Furchen 2 bis 11 mit dem weiteren Material 24, einem Glas mit anderem Brechungsindex als der geformte Körper 15 befüllt.

An Stelle des weiteren Glases 24 können auch Kunststoffe, insbesondere Thermoplaste, eingesetzt werden. Derartige weitere Materialien können bereits in die Vorform eingebracht und bei ähnlichem thermischem Verhalten wie die Vorform 1 durch Ziehen mitverformt werden.

Alternativ kann das weitere Material 24 bei von der Vorform 1 verschiedenem thermischem Verhalten heiß in einen erkalteten geformten Körper 15 eingebracht werden oder im Falle von Kunststoff erweichter Form eingebracht werden und in den Furchen 3 bis 10 durch Lösungsmittel-Verdunstung, Polymerisation oder auf andere, dem Fachmann bekannte Weise aushärten.

Bei der in Fig. 13 gezeigten Querschnittdarstellung des geformten Körpers 15 sind Wellenleiter 25 bis 32 in den u-förmigen Furchen 3 bis 10 in engem Kontakt zu den Seiten- und Bodenflächen der Furchen 3 bis 10 gehalten.

Bei entsprechender Dimensionierung der Furchen 3 bis 10 kann hierdurch ein zuverlässiger Preßsitz für die optischen Wellenleiter 25 bis 32 bereit gestellt werden, ohne daß es jedoch in den Wellenleitern zu spannungsinduzierten Doppelbrechungsverlusten kommt, da aufgrund der hohen Präzision der Abmessungen der Furchen 3 bis 10 sowie der Genauigkeit der äußeren Abmessungen des elastischen Mantels der optischen Wellenleitern 25 bis 32 bestimmte Grenzwerte der aufgebrachten Kräfte zuverlässig nicht überschritten werden.

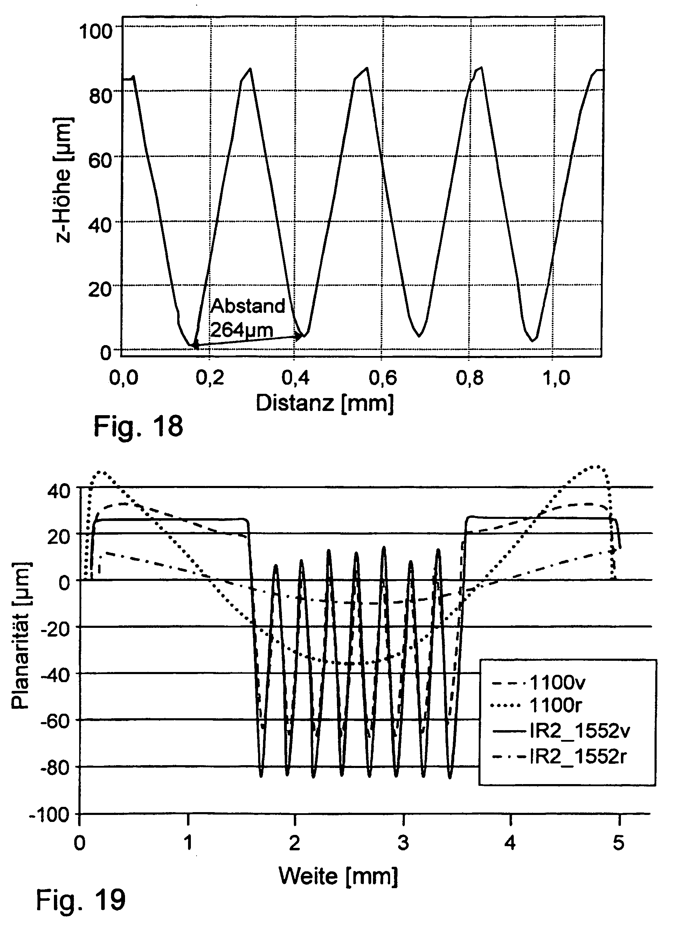

Um ein Maß für die Genauigkeit der Formeinhaltung zu erhalten, sind in Fig. 18 Meßergebnisse dargestellt, welche die Form des gezogenen Körpers 15 wiedergeben.

Die Verkleinerung der Querschnittsfläche betrug bei der in Fig. 18 dargestellten Ausführungsform 1:100, kann jedoch in erfindungsgemäßer Weise bis zu 1:100.000 oder mehr betragen.

Die Vorform hatte einen exakt v-förmigen Querschnitt, der nur in den Bereichen der Spitzen, dies bedeutet am Boden und an der höchsten Stelle der Furchen, äußerst geringfügige Formänderungen aufweist. Das Maß dieser Formänderungen ist der an einem Borofloatglas gemessenen Kurve aus Fig. 14 direkt zu entnehmen.

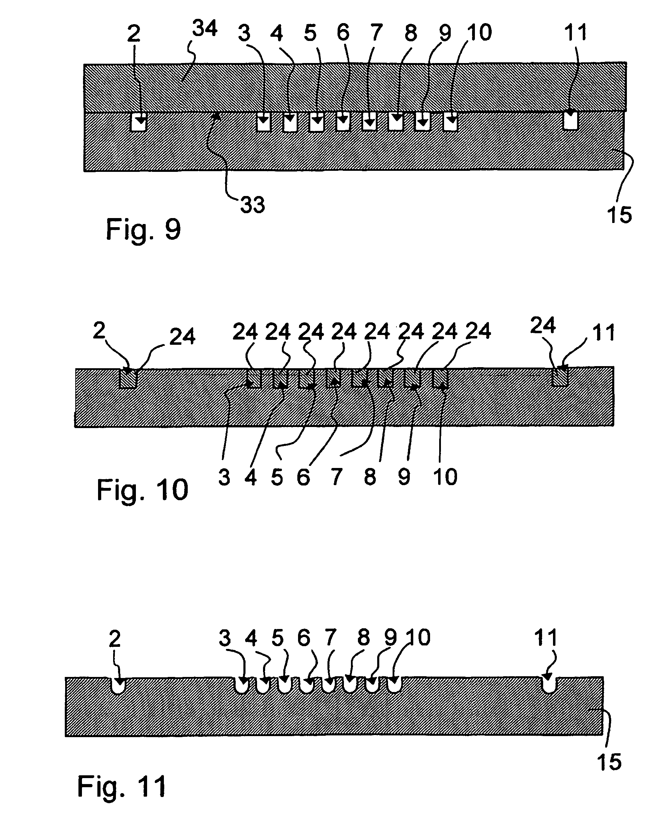

Abschließend wird auf eine nochmals weitere erfindungsgemäße Ausführungsform Bezug genommen, welche in Fig. 9 dargestellt ist und bei welcher die Innenwände von im wesentlichen rechteckförmigen Furchen 2 bis 11 verspiegelt sind. Darüber hinaus ist die Unterseite 33 eines auf dem geformten Körper 15 angeordneten Substrates 14 verspiegelt. Hierdurch stellen die Furchen 2 bis 11 Hohl-Leiter zur Verfügung, welche ebenfalls zur Weiterleitung optischer Signale geeignet sind.

Ferner liegt es im Rahmen der Erfindung, derartige verspiegelte Furchen 2 bis 11 mit dem weiteren Material 24 zu befüllen, um auf diese Weise optische Wellenleiter auszubilden.

Obwohl in den Fig. 9 bis 13 Furchen mit im wesentlichen senkrechten Seitenwänden dargestellt wurden, ist die Erfindung hierauf nicht beschränkt. Es liegt ferner im Rahmen der Erfindung, diese Seitenwände unter einem nahezu beliebigen Winkel anzuordnen, wodurch auch insbesondere trapezförmige Furchengeometrien verwirklicht werden können.

Nachfolgend wird auf Fig. 14 Bezug genommen, in welcher ein durch Ziehen der Vorform 1 erhaltenes Querschnittsprofil einer Ausführungsform eines durch den Ziehvorgang in den Abmessungen gegenüber der Vorform stark verkleinerten Bauteils, beziehungsweise geformten Körpers 15 gezeigt ist.

Entlang der Länge des Bauteils 15 erstrecken sich im Substrat 18 Kanalstrukturen 41 - 45, welche in dieser Ausführungsform einen trapezförmigen Querschnitt aufweisen. Durch die Gestaltung der übrigen Oberflächen können mehrere Bauteile passgenau übereinander angeordnet werden. Dabei kommen die Flächen 40 der im folgenden als Oberseite bezeichneten Seite 17 auf den Flächen 50 der Unterseite 16 zu liegen, wobei die seitliche Ausrichtung über die Flanken 47 gewährleistet ist, die auf die darunter liegenden Flanken 46 treffen. Die Fläche 48 schließt die Kanalstrukturen 41 - 45 des darunter liegenden Bauteils ab.

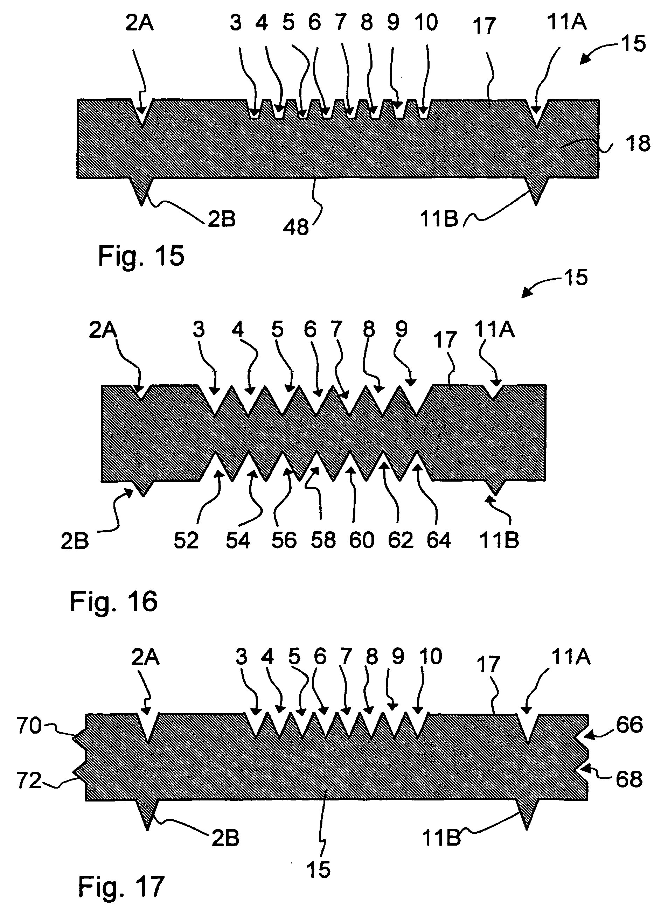

Fig. 15 zeigt ein durch Ziehen der Vorform erhaltenes Querschnittsprofil einer weiteren Ausführungsform eines durch den Ziehvorgang in den Abmessungen gegenüber der Vorform stark verkleinerten Bauteils, beziehungsweise geformten Körpers 15. Diese Ausführungsform weist einen zu der in Fig. 3B gezeigten Ausführungsform ähnlichen Querschnitt auf, wobei jedoch die Seite 17 neben den v-förmigen Strukturen 2A und 11A trapezförmige Kanalstrukturen 3 - 10 aufweist. Hier garantieren die Vorsprünge 2B und 11B auf der Unterseite, die in entsprechende Rillen 2A und 11A auf der Oberseite eines darunterliegenden identischen Körpers 15 eingreifen, dass mehrere Bauteile 15 passgenau übereinander gestapelt werden können. Dabei werden wiederum die trapezförmigen Kanalstrukturen 3 - 10 von der Seite 48 des jeweils darüber liegenden Teils 15 abgeschlossen.

Fig. 16 zeigt ebenfalls einen Querschnitt durch ein erfindungsgemäß hergestelltes Bauteil. Hier ergänzen sich die v-förmigen Rillenstrukturen 52, 54, 56, 58, 60, 62 und 64 auf einer Seite eines Bauteils mit den v-förmigen Rillenstrukturen 3 - 9 auf einer weiteren, im wesentlichen gegenüberliegenden Seite eines identischen, darüber angeordneten Bauteils 15, wobei die Strukturen 3 - 9 und 52 - 64 der gestapelten Bauteile 15 zusammen Kanäle mit rautenförmigem oder quadratischem Querschnitt bilden. Auch hier erlauben die Vorsprünge 2B, 11B und die entsprechenden Rillen 2A, 11A ein passgenaues Stapeln der Bauteile 15.

Nachfolgend wird auf Fig. 17 Bezug genommen, in welcher ein Querschnitt durch noch eine weitere Ausführungsform eines mit dem erfindungsgemäßen Verfahren hergestellten Bauteils oder geformten Körpers 15 dargestellt ist. Zusätzlich zur Oberseite 17 und Unterseite 16 sind auch die seitlichen Flächen mit uniaxialen, langgestreckten Strukturen 66, 68, 70, 72 versehen. Die Rillenstrukturen 3 - 10 auf der Oberseite dienen beispielsweise zur örtlichen Fixierung von Lichtwellenleitern. Die Strukturen 2B und 11B auf der Unterseite erlauben eine sehr genaue Fixierung des Bauteils auf einer nicht dargestellten Unterlage, die entsprechende Vertiefungen aufweist. Ebenso können mehrere dieser Bauteile passgenau aufeinandergesetzt werden, wobei die Strukturen 2B, 11B und 2A, 2B ineinandergreifen. Die uniaxialen, langgestreckten Strukturen auf den Seitenflächen des Bauteils 15 stellen Erhebungen 70, 72 und Vertiefungen 66, 68 dar. Über die Erhebungen, 70, 72 und Vertiefungen 66, 68 auf den seitlichen Flächen können mehrere identische Bauteile 15 sehr passgenau auch nebeneinander positioniert werden. Außer den dargestellten winkligen Strukturen sind selbstverständlich auch Strukturen mit senkrechten Wänden oder runden Querschnittsformen möglich.

Selbstverständlich können nicht nur gleichartige erfindungsgemäße geformte Körper 15 auf- oder nebeneinander gestapelt werden. Vielmehr können auch Bauteile mit unterschiedlichen Strukturen miteinander kombiniert werden, sofern sie auch komplementäre Strukturen für die gegenseitige Ausrichtung aufweisen.

In Fig. 19 ist ein Vergleich der Planarität eines erfindungsgemäß unter Verwendung von kurzwelliger Infrarotstrahlung gezogenen Körpers mit einem mittels konventioneller Widerstandsheizung erwärmten und gezogenen Körper dargestellt. Dabei zeigen die mit "1100v" und "1100r" bezeichneten Kurven die am konventionell erwärmten Körper abgenommenen Meßwerte an strukturierter Vorderseite, beziehungsweise an der nicht mit Strukturen versehenen Rückseite. Dementsprechend zeigt die mit "IR2_1552" bezeichnete Kurve die Planarität der strukturierten Vorderseite eines unter Erwärmung mit kurzwelliger Infrarotstrahlung gezogenen Körpers und die mit "IR2_1552" bezeichnete Kurve die Planarität der Rückseite dieses Körpers. Die Körper entsprechen in ihrer Querschnittsform im wesentlichen der in Fig. 3A gezeigten Ausführungsform ohne die v-förmigen Furchen 2 und 11. Die Meßwerte wurden entlang einer Richtung abgenommen, die im wesentlichen senkrecht zur Zugrichtung bei der Herstellung liegt, so daß sie das Querschnittsprofil senkrecht zur Zugrichtung wiedergeben.

Bei beiden vermessenen Körpern wurde eine circa 0,6 Meter lange Vorform aus Borofloatglas mit der Bezeichnung Borofloat 40 durch Schleifen mit acht v-förmigen Einsenkungen versehen. Die Vorform hat dabei eine Breite von 48 Millimetern und eine Stärke von 11,5 Millimetern. Die Seiten und die Nuten, beziehungsweise Einsenkungen sind auf besser als 5 Mikrometer maßgenau.

Zur Herstellung des mit konventioneller Heizung gezogenen Körpers wurde die Vorform so eingespannt, daß deren unteres Ende in eine mit einer konventionellen Widerstandsheizung ausgestatteten Heizmuffel hineinragt. Die Heizmuffel wurde anschließend auf 850 °C gebracht. Nach Erweichung des Glases wurde es nach unten mit einer Geschwindigkeit von 270 Millimeter/Minute abgezogen und die Vorform mit einer Geschwindigkeit von 3 Millimeter/Minute nachgeführt. Das gezogene Produkt wurde anschließend vereinzelt und dann mit einem Messtaster untersucht.

Der erfindungsgemäß hergestellte Körper wurde in gleicher Weise hergestellt, wobei zum Heizen anstelle der mit einer konventionellen Widerstandsheizung ausgestatteten Heizmuffel eine mit drei kurzwelligen Infrarotstrahlern ausgestattete Heizmuffel eingesetzt wurde. Wie anhand der in Fig. 19 gezeigten Graphen offensichtlich ist, zeigt der mittels kurzwelliger Infrarotstrahlung gezogene Körper eine wesenlich besserer Formtreue verglichen mit durch konventionelles Heizen gefertigten Körper. So zeigen die Kanten der v-förmigen Nuten beim erfindungsgemäß hergestellten Körper eine geringere Verrundung, was sich in einer größeren Tiefe der Nuten im Vergleich mit anderen Körper äußert.

Die an der Rückseite der Körper abgenommenen Meßwerte der mit "1100r", beziehungsweise "IR2_1552r" bezeichneten Kurven in Fig. 19 zeigen außerdem, daß die erfindungsgemäß hergestellten Körper auch eine geringere Neigung zum unerwünschten Effekt des "Dog-Boning" zeigen. Bei diesem Effekt kommt es zu einer konkaven Verformung von ebenen Flächen, so daß eine rechteckförmige Vorform sich beim Ziehen einem Körper mit Hundeknochenförmigem Querschnitt annähert.

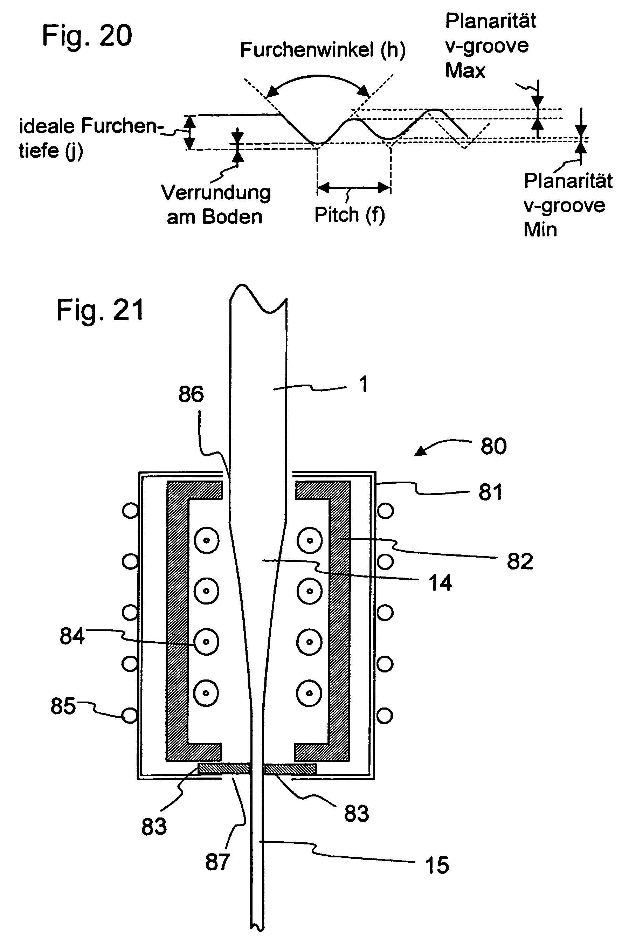

Die folgende Tabelle gibt einen quantitativen Vergleich, wobei die angegebenen Größen " Planarität v-groove Max" und "Planarität v-groove Min" in Fig. 20 erklärt werden. Die in der Tabelle aufgelisteten Abweichungen sind in Mikrometern angegeben:

| Parameter | Konventionelle Heizung | Kurzwellige Infrarotheizung |
|---|---|---|
| Planarität der Vorderseite | 16,31 | 7,53 |
| Planarität der Rückseite | 87,83 | 24,01 |
| Planarität v-Groove Max | 5,29 | 8,89 |
| Planarität v-Groove Min | 4,99 | 1,97 |

In Fig. 21 ist eine beispielhafte Ausführungsform einer Heizmuffel zum Erwärmen der Ziehzwiebel, beziehungsweise dem wie in Fig. 4 dargestellten erwärmtem Bereich 14 zur Erwärmung mittels kurzwelliger Infrarotstrahlung dargestellt.

Die als Ganzes mit 80 bezeichnete Heizmuffel umfaßt einen Quarzalzylinder 82, der beispielsweise aus zwei Halbschalen gefertigt sein kann. Der Quarzalzylinder 82 wirkt als diffuser Reflektor und somit als ein die Strahlung der Strahlungsquelle reflektierendes oder streuendes Element, so daß die Strahlung, die beim Durchgang durch das Werkstück, beziehungsweise durch den erwärmten Bereich 14 nicht absorbiert wurde, wieder auf das Werkstück reflektiert werden und das zu erwärmende Material erneut durchqueren kann.

Selbstverständlich kann die Heizmuffel jedoch auch andere Formen von Reflektoren umfassen. Beispielsweise kann die Heizmuffel verspiegelte Flächen aufweisen.

Die Heizmuffel 80 weist außerdem ein Gehäuse 81 auf, welches mit Kühlrohren 85 zur Wasserkühlung ausgestattet ist. Die Ausgangsöffnung 87 der Muffel 80 läßt sich durch zwei verschiebbare Quarzalteile 83 nach dem Anziehen der Vorform bis auf eine kleine Öffnung für den ausgezogenen Körper 15 verschließen. Dies minimiert einen störenden Kamineffekt, der die Temperaturverteilung in der Ziehzwiebel 14 beeinflussen und so zu unerwünschten Verformungen des ausgezogenen Körpers 15 führen könnte.

In den Quarzalzylinder 82 sind Infrarotstrahler 84 eingebaut, deren emittierte Strahlung eine solche spektrale Verteilung aufweist, daß das zu erwärmende Material der Vorform für zumindest 50% der emittierten Strahlungsleistung transparent ist, so daß höchstens 50% der Strahlungsleistung beim einmaligen Durchqueren des Materials absorbiert wird. Die einzelnen Strahler 84 können einzeln angesteuert werden, was eine gezielte Beeinflusung der Ausdehnung und Temperaturverteilung der Ziehzwiebel 14 ermöglicht. Bevorzugt werden Infrarot-Quarzrohrstrahler für Vorformen aus Glas oder Glaskeramik verwendet, die mit einer Farbtemperatur von circa 2400 °K betrieben werden können, so daß durch die niedrige Absorption derartiger Vorformmaterialien bei Wärmestrahlung mit einer solchen Farbtemperatur eine besonders gleichmäßige Erwärmung erreicht werden kann.

Im Quarzalzylinder 82 können sich außerdem in Fig. 21 nicht gezeigte Bohrungen für die Aufnahme der Strahler oder für Thermoelemente befinden. Weitere Bohrungen können für das Messen der Glastemperatur mittels Pyrometer im Quarzalzylinder 82 eingefügt sein.

Die Heizmuffel ist bevorzugt räumlich fest als Bestandteil einer Ziehvorrichtung angeordnet. Im Betrieb bleibt die Ziehzwiebel 14 im Innenbereich der feststehenden Heizmuffel so ebenfalls räumlich feststehend und die Vorform wird mit einer sich aus der Ziehgeschwindigkeit und dem Verkleinerungsfaktor ergebenden Geschwindigkeit nachgeführt.

### Bezugszeichenliste

- 1: Vorform
- 2 - 11, 2A, 11A, 52, 54, 56, 58, 60, 62, 64: Furche, Einsenkung, Rillenstruktur
- 2B, 11B: Erhebungen
- 120: erste Seite von 1
- 130: zweite Seite von 1

- 13: Oberfläche von 1
- 14: erwärmter Bereich von 1, Ziehzwiebel
- 15: geformter Körper
- 16: Unterseite des geformten Körpers
- 17: Oberseite des geformten Körpers
- 171 - 178: Phasenfrontvektor
- 18: Substrat des geformten Körpers
- 24: weiteres Glas, weiteres Material
- 25 - 32: Wellenleiter
- 33: Unterseite des oberen Substrats 34
- 34: oberes Substrat
- 40, 50: Flächen, Auflageflächen
- 41 - 45: Kanalstrukturen
- 46, 47: Flanken
- 48: Abschlußfläche
- 66, 68: Vertiefungen auf Seitenfläche
- 70, 72: Erhebungen auf Seitenfläche
- 80: Heizmuffel
- 81: Gehäuse von 80
- 82: Quarzalzylinder
- 83: verschiebbare Quarzalteile
- 84: Infrarotstrahler
- 85: Kühlrohre

## Patentansprüche

1. Verfahren zur Formung eines Körpers, insbesondere eines Körpers mit an dessen Oberfläche angebrachten langgestreckten Strukturen, wobei
eine Vorform an der Oberfläche (13) mit entlang einer Richtung langgestreckten Strukturen (2 - 11, 2A, 11A, 2B, 11B, 41 - 50, 52 - 64, 66 - 72) versehen wird,
die mit den Strukturen versehende Vorform zumindest in einem Bereich (14) mittels Strahlung erwärmt wird und die mit den Strukturen versehene Vorform im erwärmten Zustand so lang gezogen wird, bis zumindest ein Teil der Vorform einen Querschnitt angenommen hat, der im wesentlichen der erwünschten Querschnittsform oder endgültigen Querschnittsform entspricht,
wobei die Vorform bei einer Viskosität die in einem Bereich von etwa 10⁵ dPas bis 10¹⁰ dPas liegt, gezogen wird,
**dadurch gekennzeichnet, dass**
zum Erwärmen der Vorform Strahlung verwendet wird, die eine derartige spektrale Verteilung aufweist, daß höchstens die Hälfte der Strahlungsleistung beim einmaligen Durchqueren des Materials absorbiert wird.

2. Verfahren nach Anspruch 1, **dadurch gekennzeichnet, daß** die Strahlungsleistung einen Anteil indirekter Strahlung umfaßt.

3. Verfahren nach Anspruch 1 oder 2, **dadurch gekennzeichnet, daß** weniger als 30% oder weniger als 10% der Strahlungsleistung beim einmaligen Durchqueren des Materials absorbiert werden.

4. Verfahren nach einem der Ansprüche 1 bis 3, **dadurch gekennzeichnet, daß** Infrarotstrahlung mit einem Schwerpunkt der Leistungsdichte im kurzwelligen Infrarotbereich verwendet wird.

5. Verfahren nach einem der Ansprüche 1 bis 4, **dadurch gekennzeichnet, daß** Wärmestrahlung mit einer Farbtemperatur von mehr als 1500 °K, bevorzugt von mehr als 2000 °K zum Erwärmen verwendet wird.

6. Verfahren nach einem der Ansprüche 1 bis 5, **dadurch gekennzeichnet, daß** die Vorform mit Einsenkungen versehen wird.

7. Verfahren nach einem der Ansprüche 1 bis 6, **dadurch gekennzeichnet, daß** die Oberfläche der Vorform durch zumindest eines der Verfahren formgebend bearbeitet wird:
- Schleifen,
- Heißformung innerhalb einer Pressform,
- Blankpressen,
- Heißprägen mittels eines Stempels, welcher im wesentlichen eine Negativform der erwünschte Form der zu bearbeitenden Oberfläche aufweist,
- Aufschmelzen zumindest eines profilierten Strangs.

8. Verfahren zur Formung eines Körpers nach einem der vorstehenden Ansprüche, **dadurch gekennzeichnet, daß** die Vorform im erwärmten Zustand bei einer Temperatur, die in einem Bereich von etwa 100°C bis 2.000°C liegt, gezogen wird.

9. Verfahren zur Formung eines Körpers nach einem der vorstehenden Ansprüche, **dadurch gekennzeichnet, daß** die Vorform im erwärmten Zustand bei einer Temperatur, von etwa 850 °C gezogen wird.

10. Verfahren zur Formung eines Körpers nach einem der vorstehenden Ansprüche, **dadurch gekennzeichnet, daß** die Vorform im erwärmten Zustand bei einer Viskosität die in einem Bereich von etwa 10⁵ dPas bis 10¹⁰ dPas liegt, gezogen wird.

11. Verfahren zur Formung eines Körpers nach einem der vorstehenden Ansprüche, **dadurch gekennzeichnet, daß** die Vorform im erwärmten Zustand bei einer Viskosität, von etwa 10⁸ dPas gezogen wird.

12. Verfahren zur Formung eines Körpers nach einem der vorstehenden Ansprüche, **dadurch gekennzeichnet, daß** die geformten Körper durch Ritzen und Brechen abgelängt und/oder vereinzelt werden.

13. Verfahren zur Formung eines Körpers nach Anspruch 12, **dadurch gekennzeichnet, daß** die geformten und durch Ritzen und Brechen abgelängten und/oder vereinzelten Körper auf deren Oberfläche plan geschliffen werden.

14. Verfahren zur Formung eines Körpers nach einem der vorstehenden Ansprüche, **dadurch gekennzeichnet, daß** die Vorform und der gezogene Körper ein Glas, insbesondere ein Borofloatglas, und ein Quarzglas umfasst.

15. Verfahren zur Formung eines Körpers nach einem der vorstehenden Ansprüche, **dadurch gekennzeichnet, daß** die Vorform und der gezogene Körper eine Glaskeramik, insbesondere eine Glaskeramik mit einem Temperaturbereich innerhalb dessen diese Glaskeramik nahezu keine thermische Ausdehnung aufweist, umfasst.

16. Verfahren zur Formung eines Körpers nach.einem der vorstehenden Ansprüche, **dadurch gekennzeichnet, daß** die Vorform und der gezogene Körper einen Kunststoff, insbesondere einen thermoplastischen Kunststoff, umfasst.

17. Verfahren gemäß einem der Ansprüche 1 bis 16 zur Herstellung von Körpern (15) mit zumindest entlang einer Richtung des Körpers langgestreckten Strukturen (2 - 11, 2A, 11A, 2B, 11B, 41 - 50, 52 - 64, 66 - 72), **dadurch gekennzeichnet, daß** der Vorkörper (1) auf zumindest zwei Seiten (12, 13) entlang einer Richtung mit langgestreckten Strukturen (2 - 11, 2A, 11A, 2B, 11B, 41 - 50, 52 - 64, 66 - 72) versehen wird

18. Verfahren nach Anspruch 17, wobei die zumindest zwei Seiten (12, 13) im wesentlichen einander gegenüberliegen.

19. Verfahren nach einem der Ansprüche 1 bis 18, wobei der Vorkörper im Querschnitt ein exaktes vergrößertes Abbild des herzustellenden Körpers ist.

20. Verfahren nach einem der Ansprüche 1 bis 19, **dadurch gekennzeichnet, daß** der erwärmte Bereich räumlich festgehalten und die Vorform nachgeführt wird.

21. Geformter Körper, **gekennzeichnet durch** dessen Herstellung nach einem Verfahren gemäß einem der Ansprüche 1 bis 20 oder 46 bis 47.

22. Geformter Körper, herstellbar nach einem Verfahren gemäß einem der Ansprüche 1 bis 20 oder 46 bis 47, umfassend ein Substrat mit langgestreckten Strukturen, die sich im wesentlichen parallel zur Längsachse des geformten Körpers erstrecken.

23. Geformter Körper nach Anspruch 22, **dadurch gekennzeichnet, daß** die Strukturen Einsenkungen umfassen, welche Furchen definieren,

24. Geformter Körper nach Anspruch 23, **dadurch gekennzeichnet, daß** die Furchen einen im wesentlichen v-förmigen Querschnitt aufweisen.

25. Geformter Körper nach Anspruch 24, **dadurch gekennzeichnet, daß** die Furchen einen im wesentlichen Rechteck- oder Trapez-förmigen Querschnitt aufweisen.

26. Geformter Körper nach Anspruch 25, **dadurch gekennzeichnet, daß** die Furchen einen im wesentlichen u-förmigen Querschnitt aufweisen.

27. Geformter Körper nach einem der Ansprüche 23 bis 26, **dadurch gekennzeichnet, daß** die Neigung der Seitenwände der Furchen einem im wesentlichen vordefinierbarem Neigungswinkel der Vorform entsprechen.

28. Geformter Körper nach einem der Ansprüche 23 bis 27, wobei die Seitenflächen der Furchen (2A, 11A, 3 - 10, 41 - 45, 52 - 64) mit im wesentlichen v-förmigen Querschnitt unterschiedliche Winkel zur Oberfläche des geformten Körpers (15) einnehmen.

29. Geformter Körper (15), gemäß einem der Ansprüche 21 bis 28, wobei das Substrat (18), auf einer Seite (17) zumindest eine erste langgestreckte Struktur (2A, 11A, 3 - 10, 40 - 46) und auf zumindest einer weiteren Seite (16) zumindest eine zweite langgestreckte Struktur (2B, 11B, 52 - 64) aufweist, wobei sich die Strukturen im wesentlichen parallel zur Längsachse des geformten Körpers (15) erstrecken.

30. Geformter Körper nach Anspruch 29, wobei die zumindest eine erste Struktur (2A, 11A, 3 - 10, 40, 46, 70, 72) und die zumindest eine zweite Struktur (2B, 11B, 52, 64, 66, 68) ineinandergreifende Profile aufweisen.

31. Geformter Körper gemäß einem der Ansprüche 29 oder 30, **dadurch gekennzeichnet, daß** die zumindest eine erste Struktur (2A, 11A, 3 - 10, 40 - 46, 70, 72) und die zumindest eine zweite Struktur (2B, 11B, 52 - 64, 66, 68) komplementäre Profile aufweisen.

32. Anordnung **gekennzeichnet durch** den geformten Körper nach einem der Ansprüche 23 bis 31 mit einem in die Furche eingelegten Wellenleiter.

33. Anordnung nach Anspruch 32, **dadurch gekennzeichnet, daß** ein Material in die Furche eingebracht ist, welches einen anderen Brechungsindex als das Substrat aufweist und in der Furche ein Wellenleiter in die Furche definiert ist.

34. Abstandshalter umfassend einen geformten Körper nach einem der Ansprüche 21 bis 31 oder eine Anordnung nach einem der Ansprüche 32 oder 33.

35. Gitter, insbesondere Transmissions- oder Reflexionsgitter umfassend einen geformten Körper nach einem der Ansprüche 21 bis 31 oder eine Anordnung nach einem der Ansprüche 32 oder 33.

36. Gitter nach Anspruch 35, bei welchem ein Blazing, insbesondere eine Erhöhung des gebeugten Lichtanteils in zumindest einer Beugungsordnung, durch die Form der Furchen bewirkt ist.

37. Gitter mit verteilter Bragg-Reflexion umfassend einen geformten Körper nach einem der Ansprüche 21 bis 31.

38. Spektrometer umfassend ein Gitter nach einem der Ansprüche 35, 36 oder 37.

39. Nachrichtentechnisches Gerät umfassend einen Gegenstand gemäß einem der Ansprüche 21 bis 31 oder eine Anordnung nach einem der Ansprüche 32 oder 33.

40. Vorrichtung zur Durchführung eines Verfahrens gemäß einem der Ansprüche 1 bis 20 oder 46 bis 47, umfassend
- eine Strahlungsquelle (84) zur Erwärmung wenigstens eines Bereichs (14) einer Vorform (1),
- eine Aufnahme zur einseitigen Halterung der Vorform (1), sowie
- eine Zugvorrichtung zum Ausziehen der Vorform,
**dadurch gekennzeichnet, daß** die Strahlung der Strahlungsquelle eine derartige spektrale Verteilung aufweist, daß höchstens die Hälfte der Strahlungsleistung beim einmaligen Durchqueren des Materials absorbiert wird.

41. Vorrichtung nach Anspruch 40, **gekennzeichnet durch** eine Einrichtung zur Nachführung der Vorform (1).

42. Vorrichtung nach Anspruch 40 oder 41, wobei die Strahlungsquelle in einer Heizmuffel angeordnet ist.

43. Vorrichtung nach einem der Ansprüche 40 bis 42, **dadurch gekennzeichnet, daß** die Strahlungsquelle zumindest einen Infrarotstrahler umfaßt.

44. Vorrichtung nach Anspruch 43, **dadurch gekennzeichnet, daß** der Infrarotstrahler Wärmestrahlung mit einer Farbtemperatur von mehr als 1500 K oder mehr als 2000 K emittieren kann.

45. Vorrichtung nach einem der Ansprüche 40 bis 42, **gekennzeichnet durch** zumindest ein die Strahlung der Strahlungsquelle reflektierendes oder streuendes Element.

46. Verfahren zur Formung eines Körpers, insbesondere eines Körpers mit an dessen Oberfläche angebrachten langgestreckten Strukturen, insbesondere gemäß einem der Ansprüche 1 bis 20, wobei
- eine Vorform an der Oberfläche (13) mit entlang einer Richtung langgestreckten Strukturen (2 - 11, 2A, 11A, 2B, 11B, 41 - 50, 52 - 64, 66 - 72) versehen wird,
- die mit den Strukturen versehende Vorform (1) zumindest in einem Bereich (14) erwärmt wird und
- die mit den Strukturen versehene Vorform im erwärmten Zustand so lang gezogen wird, bis zumindest ein Teil der Vorform einen Querschnitt angenommen hat, der im wesentlichen der erwünschten Querschnittsform oder endgültigen Querschnittsform entspricht,
wobei die Vorform bei einer Viskosität die in einem Bereich von etwa 10⁵ dPas bis 10¹⁰ dPas liegt, gezogen wird,
**dadurch gekennzeichnet, dass**
im erwärmten Bereich die maximale Temperaturdifferenz entlang des Querschnitts kleiner als 0,5 °C ist.

47. Verfahren nach Anspruch 46, **dadurch gekennzeichnet, daß** im erwärmten Bereich die maximale Temperaturdifferenz entlang des Querschnitts kleiner als 0,1 °C ist.

## Claims

1. Method of moulding a solid body, in particular a solid body with structures extending lengthwise arranged on its upper surface wherein
a preform is provided on the upper surface (13) with structures (2 - 11, 2A, 11A, 2B, 11B, 41 - 50, 52 - 64, 66 - 72) extending lengthwise along one direction,
the preform provided with the structures is heated in at least one region (14) by means of radiation and the preform provided with the structures is drawn in the heated state until at least part of the preform has a cross-section which essentially corresponds to the desired cross-sectional form or final cross-sectional form,
wherein the preform is drawn with a viscosity which lies in the range of approximately 10⁵ dPas to 10¹⁰ dPas,
**characterised in that**
radiation is used to heat the preform which has such a spectral distribution that no more than half of the radiation output is absorbed during a single penetration of the material.

2. Method according to claim 1, **characterised in that** the radiation output has a proportion of indirect radiation.

3. Method according to claim 1 or 2, **characterised in that** less than 30% or less than 10% of the radiation output is absorbed during a single penetration of the material.

4. Method according to one of the claims 1 to 3, **characterised in that** infrared radiation is used with a concentration of the output density in the short wave infrared region.

5. Method according to one of the claims 1 to 4, **characterised in that** heat radiation is used with a colour temperature of more than 1500°K, preferably of more than 2000°K.

6. Method according to one of the claims 1 to 5, **characterised in that** the preform is provided with depressions.

7. Method according to one of the claims 1 to 6, **characterised in that** the upper surface of the preform is processed for moulding by at least one of the following methods:
- Grinding,
- hot moulding within a parison mould,
- compression moulding,
- hot pressing by means of a stamp which essentially has a negative mould of the desired mould of the surface to be processed,
- melting of at least one profiled strand.

8. Method of moulding a solid body according to one of the preceding claims, **characterised in that** the preform is drawn in a heated state at a temperature which lies in the range of approximately 100°C to 2000°C.

9. Method of moulding a solid body according to one of the preceding claims, **characterised in that** the preform is drawn in a heated state at a temperature of approximately 850°C.

10. Method of moulding a body according to one of the preceding claims, **characterised in that** the preform is drawn in a heated state with a viscosity which lies in the range of approximately 10⁵ dPas to 10¹⁰ dPas.

11. Method of moulding a solid body according to one of the preceding claims, **characterised in that** the preform is drawn in a heated state with a viscosity of approximately 10⁸ dPas.

12. Method of moulding a solid body according to one of the preceding claims, **characterised in that** the moulded body is lengthened and / or thinned out through carving and breaking.

13. Method of moulding a solid body according to claim 12, **characterised in that** the solid bodies which have been moulded and lengthened and / or thinned out through carving and breaking are ground in a planar manner on their upper surface.

14. Method of moulding a solid body according to one of the preceding claims, **characterised in that** the preform and the drawn body comprise a glass, in particular a borofloat glass and vitreous silica.

15. Method of moulding a solid body according to one of the preceding claims, **characterised in that** the preform and the drawn body comprise a glass ceramic, in particular a glass ceramic with a temperature range within which this glass ceramic has virtually no thermal expansion.

16. Method of moulding a solid body according to one of the preceding claims, **characterised in that** the preform and the drawn body comprise a synthetic material, in particular a thermoplastic synthetic material.

17. Method according to one of the claims 1 to 16 for - producing solid bodies (15) with structures (2 - 11, 2A, 11A, 2B, 11B, 41 - 50, 52 - 64, 66 - 72) extending lengthwise at least along one direction of the body, **characterised in that** the preliminary solid body is provided with structures (2 - 11, 2A, 11A, 2B, 11B, 41 - 50, 52 - 64, 66 - 72) extending lengthwise on at least two sides (12, 13) along one direction.

18. Method according to claim 17 wherein the at least two sides (12, 13) lie opposite each other.

19. Method according to one of the claims 1 to 18 wherein the preliminary solid body in cross-section is a precisely enlarged reproduction of the solid body to be produced.

20. Method according to one of the claims 1 to 19, **characterised in that** the heated region is physically maintained and the preform provided.

21. Moulded body **characterised by** its production through a method according to one of the claims 1 to 20 or 46 to 47.

22. Moulded body which can be produced through a method according to one of the claims 1 to 20 or 46 to 47 and comprising a substrate with lengthwise extending structures which extend essentially parallel to the longitudinal axis of the moulded body.

23. Moulded body according to claim 22, **characterised in that** the structures comprise depressions which define grooves.

24. Moulded body according to claim 23, **characterised in that** the grooves have an essentially V-shaped cross-section.

25. Moulded body according to claim 24, **characterised in that** the grooves have an essentially rectangular or trapezoidal cross-section.

26. Moulded body according to claim 25, **characterised in that** the grooves have an essentially u-shaped cross-section.

27. Moulded body according to one of the claims 23 to 26, **characterised in that** the inclination of the side walls of the grooves correspond to an essentially pre-definable angle of inclination of the preform.

28. Moulded body according to one of the claims 23 to 27 wherein the side areas of the grooves (2A, 11A, 3 - 10, 41 - 45, 52 - 64) with an essentially v-shaped cross-section are at different angles to the surface of the moulded body (15).

29. Moulded body (15) according to one of the claims 21 to 28 wherein the substrate (18) has on one side at least one first lengthwise extending structure (2A, 11A, 3 - 10, 40 - 46) and on at least one further side (16) at least one second lengthwise extending structure (2B, 11B, 52 - 64) wherein the structures extend essentially parallel to the longitudinal axis of the moulded body (15).

30. Moulded body according to claim 29 wherein the at least one first structure (2A, 11A, 3 - 10, 40, 46, 70, 72) and the at least one second structure (2B, 11B, 52, 64, 66, 68) have profiles engaging in each other.

31. Moulded body according to one of the claims 29 or 30, **characterised in that** the at least one first structure (2A, 11A, 3 - 10, 40 - 46, 70, 72) and the at least one second structure (2B, 11B, 52 - 64, 66, 68) have complementary profiles.

32. Arrangement **characterised by** the moulded body according to one of the claims 23 to 31 with a waveguide arranged in the groove.

33. Arrangement according to claim 32, **characterised in that** a material is placed in the groove which has a different refractive index from the substrate and in the groove a waveguide is defined into the groove.

34. Space member comprising a moulded body according to one of the claims 21 to 31 or an arrangement according to one of the claims 32 or 33.

35. Grating, in particular transmission grating or reflection grating comprising a moulded body according to one of the claims 21 to 31 or an arrangement according to one of the claims 32 or 33.

36. Grating according to claim 35 wherein a blazing, in particular an increase of the proportion of diffracted light in at least one order of diffraction, is realised through the shape of the grooves.

37. Grating with distributed Bragg reflection having a moulded body according to one of the claims 21 to 31.

38. Spectrometer comprising a grating according to one of the claims 35, 36 or 37.

39. Communication device comprising an object according to one of the claims 21 to 31 or an arrangement according to one of the claims 32 or 33.

40. Device for implementing a method according to one of the claims 1 to 20 or 46 to 47 which has:
- a radiation source (84) for heating at least one region (14) of a preform (1),
- a mounting member for mounting in respect of one side of the preform and
- a drawing device for drawing the preform, **characterised in that** the radiation from the radiation source has such a spectral distribution that no more than half of the radiation output is absorbed during a single penetration of the material.

41. Device according to claim 40, **characterised by** a device for providing the preform (1).

42. Device according to claim 40 or 41 wherein the radiation source is arranged in a heating muffle.

43. Device according to one of the claims 40 to 42, **characterised in that** the radiation source has at least one infrared radiation device.

44. Device according to claim 43, **characterised in that** the infrared radiation device can emit heat radiation with a colour temperature of more than 1500 K or more than 2000 K.

45. Device according to one of the claims 40 to 42, **characterised by** at least one element reflecting or dispersing the radiation of the radiation source.

46. Method of moulding a solid body, in particular a solid body with structures extending lengthwise on its surface, in particular according to one of the claims 1 to 20 wherein
- a preform is provided on the upper surface (13) with structures (2 - 11, 2A, 11A, 2B, 11B, 41 - 50, 52 - 64, 66 - 72) extending lengthwise,
- the preform (1) provided with the structures is heated in at least one region (14) by means of radiation
- the preform provided with the structures is drawn in a heated state until at least a part of the preform has a cross-section which essentially corresponds to the desired cross-sectional form or final cross-sectional form,
wherein the preform is drawn with a viscosity which lies in the range of approximately 10⁵ dPas to 10¹⁰ d Pas,
**characterised in that**
in the heated region the maximum temperature difference along the cross-section is less than 0.5°C.

47. Method according to claim 46, **characterised in that** in the heated region the maximum temperature difference along the cross-section is less than 0.1°C.

## Revendications

1. Procédé destiné à la conformation d'un corps, notamment d'un corps comportant des structures allongées agencées sur sa surface, dans lequel
la surface (13) d'une forme préliminaire est pourvue le long d'une direction de structures allongées (2 à 11, 2A, 11A, 2B, 11B, 41 à 50, 52 à 64, 66 à 72),
la forme préliminaire dotée des structures est chauffée au moyen d'un rayonnement, au moins dans une zone (14), et la forme préliminaire dotée des structures est étirée à l'état chauffé jusqu'à ce qu'une partie au moins de la forme préliminaire présente une section transversale qui correspond sensiblement à la forme en section transversale souhaitée ou à la forme en section transversale définitive,
la forme préliminaire étant étirée à une viscosité se situant dans une plage de l'ordre de 10⁵ dPas à 10¹⁰ dPas,
**caractérisé en ce que**,
pour le chauffage de la forme préliminaire, il est utilisé un rayonnement dont la répartition spectrale est telle qu'au maximum la moitié de la puissance de rayonnement soit absorbée lors de l'unique passage à travers le matériau.

2. Procédé selon la revendication 1, **caractérisé en ce que** la puissance de rayonnement comprend une proportion de rayonnement indirect.

3. Procédé selon la revendication 1 ou 2, **caractérisé en ce que** moins de 30 % ou moins de 10 % de la puissance de rayonnement sont absorbés lors de l'unique passage à travers le matériau.

4. Procédé selon l'une des revendications 1 à 3, **caractérisé en ce qu'**il est utilisé un rayonnement infrarouge avec un barycentre de la puissance volumique dans la plage des infrarouges à ondes courtes.

5. Procédé selon l'une des revendications 1 à 4, **caractérisé en ce que** du rayonnement thermique avec une température de couleur de plus 1 500 °K, de préférence de plus 2 000 °K, est utilisé pour le chauffage.

6. Procédé selon l'une des revendications 1 à 5, **caractérisé en ce que** la forme préliminaire est pourvue de renfoncements.

7. Procédé selon l'une des revendications 1 à 6, **caractérisé en ce que** la surface de la forme préliminaire est conformée par usinage selon l'un au moins des procédés :
- de rectification,
- de formage à chaud à l'intérieur d'un moule de presse,
- de pressage à blanc,
- d'estampage à chaud au moyen d'un poinçon, qui présente sensiblement une forme négative de la forme souhaitée de la surface à usiner,
- de fusion d'au moins un boyau profilé.

8. Procédé destiné à la conformation d'un corps selon l'une des revendications précédentes, **caractérisé en ce que** la forme préliminaire est étirée à l'état chauffé à une température se situant dans une plage de l'ordre de 100 °C à 2 000 °C.

9. Procédé destiné à la conformation d'un corps selon l'une des revendications précédentes, **caractérisé en ce que** la forme préliminaire est étirée à l'état chauffé à une température de l'ordre de 850 °C.

10. Procédé destiné à la conformation d'un corps selon l'une des revendications précédentes, **caractérisé en ce que** la forme préliminaire est étirée à l'état chauffé à une viscosité se situant dans une plage de l'ordre de 10⁵ dPas à 10¹⁰ dPas.

11. Procédé destiné à la conformation d'un corps selon l'une des revendications précédentes, **caractérisé en ce que** la forme préliminaire est étirée à l'état chauffé à une viscosité de l'ordre de 10⁸ dPas.

12. Procédé destiné à la conformation d'un corps selon l'une des revendications précédentes, **caractérisé en ce que** les corps conformés sont mis à longueur et/ou individualisés par entaille et cassure.

13. Procédé destiné à la conformation d'un corps selon la revendication 12, **caractérisé en ce que** la surface des corps conformés, et mis à longueur et/ou individualisés par entaille et cassure, est rectifiée de façon plane.

14. Procédé destiné à la conformation d'un corps selon l'une des revendications précédentes, **caractérisé en ce que** la forme préliminaire et le corps étiré contiennent un verre, notamment un verre au bore flotté, et un verre au quartz.

15. Procédé destiné à la conformation d'un corps selon l'une des revendications précédentes, **caractérisé en ce que** la forme préliminaire et le corps étiré contiennent une vitrocéramique, notamment une vitrocéramique d'une plage de température à l'intérieur de laquelle cette vitrocéramique ne présente pratiquement pas de dilatation thermique.

16. Procédé destiné à la conformation d'un corps selon l'une des revendications précédentes, **caractérisé en ce que** la forme préliminaire et le corps étiré contiennent une matière plastique, notamment une matière thermoplastique.

17. Procédé selon l'une des revendications 1 à 16, destiné à la fabrication de corps (15) comportant des structures allongées (2 à 11, 2A, 11A, 2B, 11B, 41 à 50, 52 à 64, 66 à 72) s'étendant au moins le long d'une direction, **caractérisé en ce que** le corps préliminaire (1) est doté au moins sur deux faces (12, 13) de structures allongées (2 à 11, 2A, 11A, 2B, 11B, 41 à 50, 52 à 64, 66 à 72) s'étendant le long d'une direction.

18. Procédé selon la revendication 17, dans le cas duquel les au moins deux faces (12, 13) sont pour l'essentiel situées l'une en face de l'autre.

19. Procédé selon l'une des revendications 1 à 18, dans le cas duquel le corps préliminaire est en section transversale une reproduction exacte à échelle agrandie du corps à fabriquer.

20. Procédé selon l'une des revendications 1 à 19, **caractérisé en ce que** la zone chauffée est retenue dans l'espace et que la forme préliminaire suit.

21. Corps conformé, **caractérisé par** sa fabrication d'après un procédé selon l'une des revendications 1 à 20 ou 46 à 47.

22. Corps conformé pouvant être fabriqué d'après un procédé selon l'une des revendications 1 à 20 ou 46 à 47, comportant un substrat avec des structures allongées qui s'étendent pour l'essentiel parallèlement à l'axe longitudinal du corps conformé.

23. Corps conformé selon la revendication 22, **caractérisé en ce que** les structures comportent des renfoncements qui définissent des sillons.

24. Corps conformé selon la revendication 23, **caractérisé en ce que** les sillons ont une section transversale sensiblement en forme de v.

25. Corps conformé selon la revendication 24, **caractérisé en ce que** les sillons ont une section transversale de forme sensiblement rectangulaire ou trapézoïdale.

26. Corps conformé selon la revendication 25, **caractérisé en ce que** les sillons ont une section transversale sensiblement en forme de u.

27. Corps conformé selon l'une des revendications 23 à 26, **caractérisé en ce que** l'inclinaison des parois latérales des sillons correspond sensiblement à un angle d'inclinaison pouvant être prédéfini de la forme préliminaire.

28. Corps conformé selon l'une des revendications 23 à 27, dans lequel les parois latérales des sillons (2A, 11A, 3 à 10, 41 à 45, 52 à 64) à section transversale sensiblement en forme de v sont positionnées à différents angles par rapport à la surface du corps conformé (15).

29. Corps conformé (15) selon l'une des revendications 21 à 28, dans lequel le substrat (18) comporte sur une face (17) au moins une première structure allongée (2A, 11A, 3 à 10, 40 à 46), et sur au moins une autre face (16) au moins une deuxième structure allongée (2B, 11B, 52 à 64), les structures s'entendant pour l'essentiel parallèlement à l'axe longitudinal du corps conformé (15).

30. Corps conformé selon la revendication 29, dans lequel la, au moins une, première structure (2A, 11A, 3 à 10, 40, 46, 70, 72), et la, au moins une, deuxième structure (2B, 11B, 52, 64, 66, 68), comportent des profils s'engageant les uns dans les autres.

31. Corps conformé selon l'une des revendications 29 ou 30, **caractérisé en ce que** la, au moins une, première structure (2A, 11A, 3 à 10, 40 à 46, 70, 72), et la, au moins une, deuxième structure (2B, 11B, 52 à 64, 66, 68), comportent des profils complémentaires.

32. Agencement **caractérisé par** le corps conformé selon l'une des revendications 23 à 31, avec un guide d'ondes inséré dans le sillon.

33. Agencement selon la revendication 32, **caractérisé en ce qu'**un matériau est inséré dans le sillon dont l'indice de réfraction est autre que celui du substrat, et **en ce que** dans le sillon, un guide d'ondes est défini dans le sillon.

34. Ecarteur comportant un corps conformé selon l'une des revendications 21 à 31 ou un agencement selon l'une des revendications 32 ou 33.

35. Grille, notamment grille de transmission ou de réflexion, comportant un corps conformé selon l'une des revendications 21 ou 31 ou un agencement selon l'une des revendications 32 ou 33.

36. Grille selon la revendication 35, dans laquelle un blazé, notamment une augmentation de la proportion de lumière diffractée dans au moins un ordre de diffraction, est provoqué par la forme des sillons.

37. Grille à réflexion de Bragg répartie, comportant un corps conformé selon l'une des revendications 21 à 31.

38. Spectromètre comportant une grille selon l'une des revendications 35, 36 ou 37.

39. Appareil de technique de communication comportant un objet selon l'une des revendications 21 à 31 ou un agencement selon l'une des revendications 32 ou 33.

40. Dispositif destiné à la mise en oeuvre d'un procédé selon l'une des revendications 1 à 20 ou 46 à 47, comportant
- une source de rayonnement (84) pour le chauffage d'au moins une zone (14) d'une forme préliminaire (1),
- une réception pour la retenue d'un coté de la forme préliminaire (1), ainsi que
- un dispositif d'étirage pour l'étirage de la forme préliminaire,
**caractérisé en ce que** la répartition spectrale du rayonnement de la source de rayonnement est telle qu'au maximum la moitié de la puissance de rayonnement soit absorbée lors de l'unique passage à travers le matériau.

41. Dispositif selon la revendication 40, **caractérisé par** un système destiné au suivi de la forme préliminaire (1).

42. Dispositif selon la revendication 40 ou 41, dans lequel la source de rayonnement est disposée dans un moufle de chauffage.

43. Dispositif selon l'une des revendications 40 à 42, **caractérisé en ce que** la source de rayonnement comporte au moins un radiateur à rayons infrarouges.

44. Dispositif selon la revendication 43, **caractérisé en ce que** le radiateur à rayons infrarouges peut émettre un rayonnement thermique d'une température de couleur de plus de 1 500 K ou de plus de 2 000 K.

45. Dispositif selon l'une des revendications 40 à 42, **caractérisé par** au moins un élément réfléchissant ou diffractant le rayonnement de la source de rayonnement.

46. Procédé destiné à la conformation d'un corps, notamment d'un corps comportant des structures allongées agencées sur sa surface, en particulier selon l'une des revendications 1 à 20, dans lequel
- la surface (13) d'une forme préliminaire est pourvue le long d'une direction de structures allongées (2 à 11, 2A, 11A, 2B, 11B, 41 à 50, 52 à 64, 66 à 72),
- la forme préliminaire (1) dotée des structures est chauffée, au moins dans une zone (14), et
- la forme préliminaire dotée des structures est étirée à l'état chauffé jusqu'à ce qu'une partie au moins de la forme préliminaire présente une section transversale qui correspond sensiblement à la forme en section transversale souhaitée ou à la forme en section transversale définitive,
la forme préliminaire étant étirée à une viscosité se situant dans une plage de l'ordre de 10⁵ dPas à 10¹⁰ dPas,
**caractérisé en ce que**
dans la zone chauffée, la différence de température maximale le long de la section transversale est inférieure à 0,5 °C.

47. Procédé selon la revendication 46, **caractérisé en ce que** dans la zone chauffée, la différence de température maximale le long de la section transversale est inférieure à 0,1 °C.
